(19) Europäisches Patentamt

European Patent Office

Office européen des brevets

(11) **EP 2 728 729 A2**

(12) **EUROPEAN PATENT APPLICATION**

(43) Date of publication:
**07.05.2014 Bulletin 2014/19**

(51) Int Cl.:
**H02M 5/16** (2006.01)     **H02M 5/297** (2006.01)

(21) Application number: **13184519.0**

(22) Date of filing: **16.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.10.2012 JP 2012239658
21.12.2012 JP 2012280275**

(71) Applicant: **Kabushiki Kaisha Yaskawa Denki
Kitakyushu-shi, Fukuoka 806-0004 (JP)**

(72) Inventors:
• **Takeda, Kotaro
Kitakyushu-shi, Fukuoka 806-0004 (JP)**
• **Watanabe, Eiji
Kitakyushu-shi, Fukuoka 806-0004 (JP)**
• **Tanaka, Takashi
Kitakyushu-shi, Fukuoka 806-0004 (JP)**
• **Inomata, Kentaro
Kitakyushu-shi, Fukuoka 806-0004 (JP)**
• **Hara, Hidenori
Kitakyushu-shi, Fukuoka 806-0004 (JP)**
• **Naka, Takuya
Kitakyushu-shi, Fukuoka 806-0004 (JP)**
• **Yoshinaga, Wataru
Kitakyushu-shi, Fukuoka 806-0004 (JP)**

(74) Representative: **Viering, Jentschura & Partner
Patent- und Rechtsanwälte
Grillparzerstrasse 14
81675 München (DE)**

(54) **Matrix converter**

(57)     A matrix converter includes: a power conversion unit (10) provided between an AC power supply (2) and a rotational machine (3); and a controller (30) for performing power conversion control therebetween by controlling the power conversion unit (10). The power conversion unit (10) includes multiple bidirectional switches (Sw1-Sw9) each of which has at least one first directional switching element (13) and at least one second directional switching element (14). Further, the controller (30) includes a first drive control unit (31) performing the power conversion by simultaneously turning on both of the first directional switching element (13) and the second directional switching element (14), and a second drive control unit (32) performing the power conversion by turning on one of the first directional switching element (13) and the second directional switching element (14).

*FIG. 1*

**Description**

Technical Field

Embodiments disclosed herein relate to a matrix converter.

Background Art

In the field of the power converter, a matrix converter has attracted keen attention recently due to its capability that can achieve a suppression of a harmonic current and an effective use of a regenerative power. Conventionally, there is known a matrix converter that includes a plurality of bidirectional switches for respectively connecting phases of an AC power supply with phases of a rotational machine, and performs power conversion by controlling the bidirectional switches. Further, as another example of the matrix converter, there is a series-connected multilevel matrix converter in which power cells performing power conversion by using a plurality of bidirectional switches are connected in series and are provided at every phases of a rotational machine.

In such a matrix converter, there has been developed a technique to stop the power conversion if the voltage of the AC power supply becomes low. For example, there is a technique for stopping the power supply to a rotational machine when the voltage of the AC power supply becomes low in a state where the motor is driven with each of its phase voltage controlled by the bidirectional switches (see, for example, Japanese Patent Application Publication No. 2005-287200).

In the matrix converter using a rotational machine as a load, however, it is preferable to continue the power conversion without stopping even when the voltage of the AC power supply becomes low.

Summary of the Disclosure

In view of the above, the disclosed embodiments provide a matrix converter capable of continuing a power conversion operation even if a voltage of an AC power supply becomes low.

In accordance with an aspect of the embodiments, there is provided a matrix converter including: a power conversion unit configured to be provided between an alternating current (AC) power supply and a rotational machine, the power conversion unit including a plurality of bidirectional switches each of which has at least one first directional switching element for allowing a current flow from the rotational machine to the AC power supply and at least one second directional switching element for allowing a current flow from the AC power supply to the rotational machine; and a controller configured to perform power conversion control between the AC power supply and the rotational machine by controlling the power conversion unit, wherein the controller includes a first drive control unit configured to perform the power conversion control by simultaneously turning on both of the first and the second directional switching element of at least one of the bidirectional switches, and a second drive control unit configured to perform the power conversion control by turning on one of the first directional switching element and the second directional switching element of each of two or more of the bidirectional switch.

With the disclosed configuration, it is possible to provide a matrix converter capable of continuing to perform a power conversion operation even when a voltage of an AC power supply becomes low.

Brief Description of the Drawings

FIG. 1 illustrates a configuration of a matrix converter in accordance with a first embodiment;
FIG. 2 shows a configuration of a bidirectional switch shown in FIG. 1;
FIG. 3 depicts an example of a specific configuration of a second drive control unit shown in FIG. 1;
FIG. 4 represents an example of a relationship between a grid reactive current command and a grid voltage value;
FIG. 5 shows a current type inverter model;
FIG. 6 illustrates a relationship between voltage phases of a grid and converter switch drive signals.
FIG. 7 presents a relationship between voltage phases of a generator and inverter switch drive signals.
FIG. 8 depicts a configuration of a plurality of bidirectional switches shown in FIG. 1.
FIG. 9 shows a configuration of a series-connected multilevel matrix converter in accordance with a second embodiment.
FIG. 10 presents an example of a specific configuration of a power cell shown in FIG. 9.
FIG. 11 illustrates an example of a configuration of a second drive control unit shown in FIG. 9.
FIG. 12 presents specific configurations of a grid pulse pattern producer, a GeGr switch drive signal generator and a GrGe switch drive signal generator which are shown in FIG. 11.

FIG. 13 depicts a relationship between voltage phases of secondary windings and converter switch drive signals.

FIG. 14 represents a relationship between voltage phases of a generator and inverter switch drive signals.

FIG. 15 depicts a first example showing a control state of the bidirectional switches.

FIG. 16 illustrates a second example showing a control state of the bidirectional switches.

FIG. 17 presents a third example showing a control state of the bidirectional switches.

FIG. 18 gives a fourth example showing a control state of the bidirectional switches.

FIG. 19 shows a configuration example of a series-connected multilevel matrix converter in accordance with a third embodiment.

FIG. 20 illustrates an example of a specific configuration of a second drive control unit shown in FIG. 19.

FIG. 21 depicts specific configurations of a grid pulse pattern producer, a GeGr switch drive signal generator and a GrGe switch drive signal generator shown in FIG. 20.

Detailed Description of the Preferred Embodiments

Hereinafter, embodiments of a matrix converter disclosed herein will be described in detail with reference to the accompanying drawings. However, this disclosure is not limited by the embodiments shown below.

(First Embodiment)

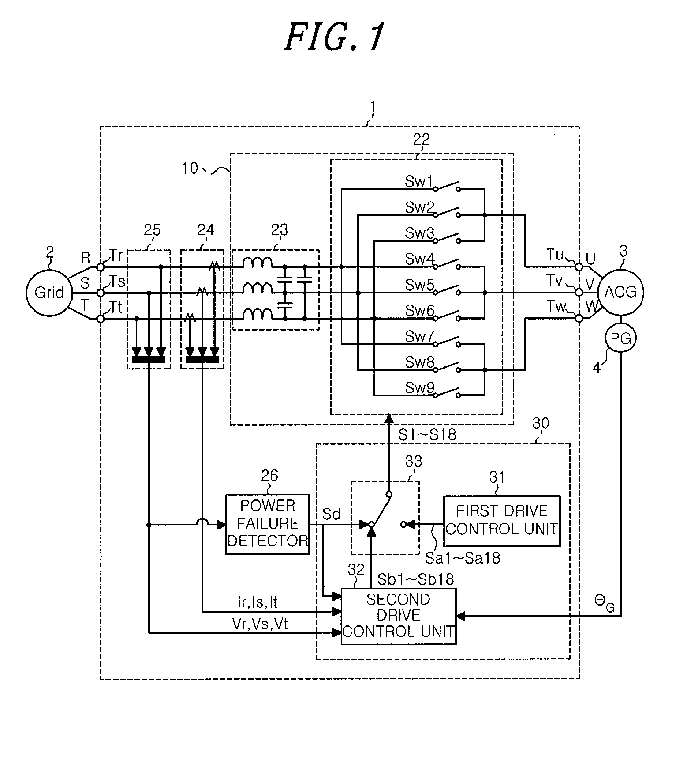

FIG. 1 is a diagram showing a configuration of a matrix converter in accordance with a first embodiment. In the present embodiment, for example, a matrix converter converts a power generated by a rotational machine that is an AC generator (ACG) to supply it to an AC power source. Herein, the rotational machine may be, for example, an AC motor, without being limited to the ACG. Further, the embodiment will be described using, for example, a power grid as an AC power source, but the AC power source is not limited thereto. Further, in the following description, for example, a case of using a synchronous generator as an example of the rotational machine 3 will be described.

As shown in FIG. 1, a matrix converter 1 in accordance with the first embodiment is provided between a power grid 2 of a three-phase alternating current and a rotational machine 3, and performs power conversion between the power grid 2 and the rotational machine 3.

A rotary shaft of the rotational machine 3 is provided with a position detector 4 for detecting a rotational position of the rotational machine 3. The rotational position $\theta_G$ of the rotational machine 3 detected by the position detector 4 is inputted to the matrix converter 1.

The matrix converter 1 has a power conversion unit 10 including an LC filter 23 and a switching unit 22, a current detector 24, a voltage detector 25, a power failure detector 26, and a controller 30. Further, the matrix converter 1 has grid side terminals Tr, Ts and Tt and generator side terminals Tu, Tv and Tw. The power grid 2 is connected to the grid side terminals Tr, Ts and Tt and the rotational machine 3 is connected to the generator side terminals Tu, Tv and Tw.

The switching unit 22 includes bidirectional switches Sw1 to Sw9 for connecting each of R-phase, S-phase and T-phase of the power grid 2 to each of U-phase, V-phase and W-phase of the rotational machine 3. The bidirectional switches Sw1 to Sw3 connect each of R-phase, S-phase and T-phase of the power grid 2 to U-phase of the rotational machine 3. The bidirectional switches Sw4 to Sw6 connect each of R-phase, S-phase and T-phase of the power grid 2 to V-phase of the rotational machine 3. The bidirectional switches Sw7 to Sw9 connect each of R-phase, S-phase and T-phase of the power grid 2 to W-phase of the rotational machine 3.

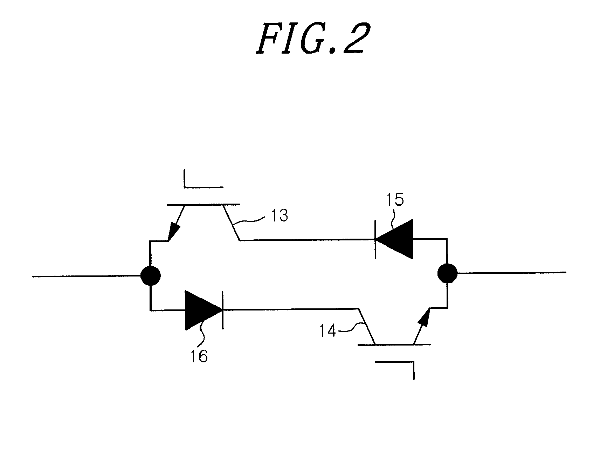

Each of the bidirectional switches Sw1 to Sw9 has a configuration as shown in FIG. 2, for example. As shown in FIG. 2, each of the bidirectional switches Sw1 to Sw9 is configured by connecting a series connection including a unidirectional switching element 13 and a diode 15 and a series connection including a unidirectional switching element 14 and a diode 16 in an inverse-parallel manner. Hereinafter, a unidirectional switching element included in each of the bidirectional switches Sw1 to Sw9 which allows a current to flow from the rotational machine 3 to the power grid 2, for example, the unidirectional switching element 13, is referred to as a "first directional switching element", and a unidirectional switching element included in each of the bidirectional switches Sw1 to Sw9 which allows a current to flow from the power grid 2 to the rotational machine 3, for example, the unidirectional switching element 14, is referred to as a "second directional switching element".

As the unidirectional switching elements 13 and 14, for example, semiconductor devices such as an Insulated Gate Bipolar Transistor (IGBT) are used. By individually turning on/off the unidirectional switching elements 13 and 14 of the bidirectional switches Sw1 to Sw9, it is possible to control the conduction direction of each of the bidirectional switches Sw1 to Sw9. Here, there will be described a case in which a bidirectional switch includes one first directional switching element and one second directional switching element. However, each of the first and the second directional switching element may be formed of two or more unidirectional switching elements connected in parallel.

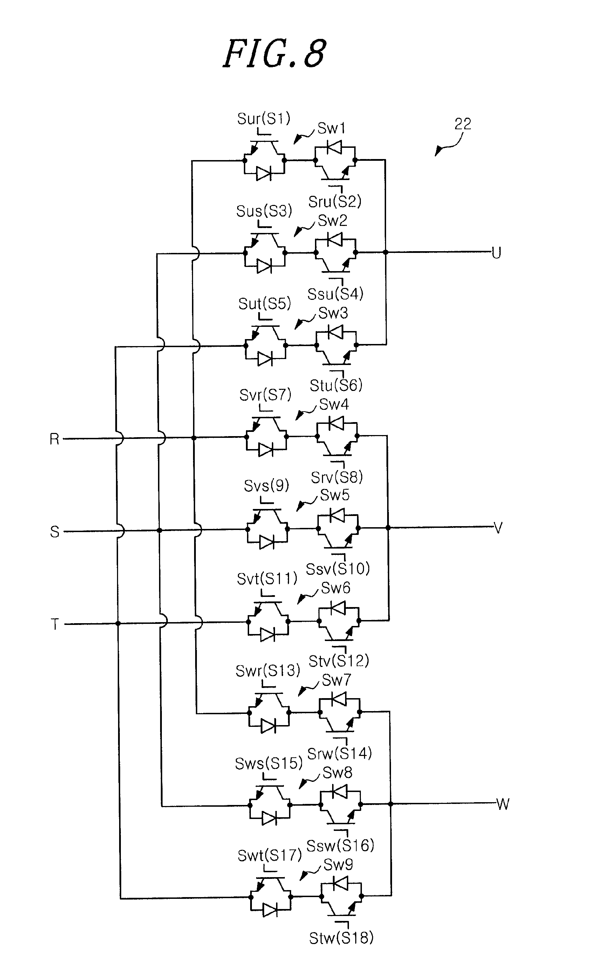

Further, a configuration of the bidirectional switches Sw1 to Sw9 is not limited to the configuration shown in FIG. 2. For example, the bidirectional switches Sw1 to Sw9 may be configured by using reverse blocking switching elements connected in an inverse-parallel manner instead of the unidirectional switching elements 13 and 14, or may have a configuration shown in FIG. 8, which will be described later.

The LC filter 23 is provided between the switching unit 22 and the R-phase, S-phase and T-phase of the power grid 2, i.e., grid side terminals Tr, Ts and Tt and suppresses any influence of a noise on the power grid 2 from the switching unit 22. Specifically, the LC filter 23 includes three capacitors and three reactors, and removes any switching noise due to switching of the bidirectional switches Sw1 to Sw9 of the switching unit 22. Thus, it is possible to suppress the switching noise caused by the switching unit 22 from being outputted to the power grid 2.

More specifically, one ends of three reactors are connected to the grid side terminals Tr, Ts and Tt, respectively, and the other ends of the three reactors are connected to the switching unit 22. Also, the three capacitors are respectively connected between the different three pairs of the other ends of the reactors.

The current detector 24 is provided between the power grid 2 and the power conversion unit 10, and detects current values Ir, Is and It (hereinafter, referred to as "grid phase current values Ir, Is and It") of the currents flowing between the power conversion unit 10 and the R-phase, S-phase and T-phase of the power grid 2, respectively. Further, the current detector 24 is a current sensor that detects the current by using, for example, a Hall element as a magneto-electric transducer.

The voltage detector 25 is provided between the power grid 2 and the power conversion unit 10, and detects voltage values Vr, Vs and Vt (hereinafter, referred to as "grid phase voltage values Vr, Vs and Vt") of the R-phase, S-phase and T-phase of the power grid 2, respectively.

The power failure detector 26 detects a voltage value Va of the grid voltage (hereinafter, referred to as a "grid voltage value Va") that is not more than a voltage value V1. If the grid voltage value Va is not more than the voltage value V1, the power failure detector 26 determines that a power failure of the power grid 2 occurs, and outputs a power failure detection signal Sd of high level (H). If the grid voltage value Va exceeds the voltage value V1, the power failure detector 26 determines that a power failure of the power grid 2 does not occur, and outputs a power failure detection signal Sd of low level (L).

The power failure detector 26 converts the grid phase voltage values Vr, Vs and Vt into $\alpha\beta$ components of two orthogonal axes on a fixed coordinate system, and obtains a grid voltage value $V_\alpha$ in an $\alpha$-axis direction and a grid voltage value $V_\beta$ in a $\beta$-axis direction. Then, the power failure detector 26 obtains the grid voltage value Va by calculating a square root of sum of squares $(= \sqrt{\left(V_\alpha{}^2 + V_\beta{}^2\right)})$ of the grid voltage values $V_\alpha$ and $V_\beta$.

The controller 30 includes a first drive control unit 31, a second drive control unit 32 and a switch 33, generates switch drive signals S1 to S18 for outputting a voltage corresponding to a voltage command to the rotational machine 3, and outputs them to the power conversion unit 10. The first drive control unit 31 generates the voltage command based on a predetermined torque command, generates switch drive signals Sa1 to Sa18 corresponding to the unidirectional switching elements of the bidirectional switch Sw1 to Sw9 based on the voltage command and outputs them to the switching unit 22. Thus, a voltage corresponding to the voltage command is outputted to the rotational machine 3 by a well-known PWM control method of a matrix converter.

Further, the voltage command is generated by a well-known vector control of a synchronous generator based on a torque command defining a torque to be generated by the rotational machine 3. The switching unit 22 simultaneously turns on both of the unidirectional switching elements 13 and 14 of the respective bidirectional switches Sw1 to Sw9 in accordance with the switch drive signals Sa1 to Sa18. Thus, a voltage corresponding to the voltage command is outputted under the PWM control, thereby performing the power conversion. In this case, a magnitude and a phase of the current flowing through each of the switching elements are determined by a relation between the generated voltage and the output voltage.

The second drive control unit 32 performs power conversion control by turning on one of the unidirectional switching elements 13 and 14 of at least one of the bidirectional switches Sw1 to Sw9 based on the grid phase voltage values Vr, Vs and Vt and the grid phase current values Ir, Is and It. That is, the second drive control unit 32 performs power conversion control by turning on either the first directional switching element or the second directional switching element.

As described above, it is possible to control the conducting direction of the respective bidirectional switches Sw1 to Sw9 by turning on one of the unidirectional switching elements 13 and 14 included in each of the bidirectional switches Sw1 to Sw9. Thus, even in a case such as a power failure when the voltage of the power grid 2 is extremely lower than the voltage of the rotational machine 3, it is possible to avoid a large current continuing to flow between the rotational machine 3 and the power grid 2, and to perform the power conversion operation while performing the current control.

For example, the second drive control unit 32 turns on the first directional switching element, i.e., the unidirectional switching element 13 in one of the bidirectional switches Sw1 to Sw9 and the second directional switching element, i.e., the unidirectional switching element 14 in another one of the bidirectional switches Sw1 to Sw9, to thereby allow a current to flow in two phases of the power grid 2 and in two phases of the rotational machine 3. With this control, it is possible to flow a current in two phases of the power grid 2 and two phases of the rotational machine 3.

The switch 33 selects either the switch drive signals Sa1 to Sa18 outputted from the first drive control unit 31 or the switch drive signals Sb1 to Sb18 outputted from the second drive control unit 32, based on the power failure detection signal Sd outputted from the power failure detector 26, and outputs them to the switching unit 22 as the switch drive signals S1 to S18. Specifically, when the power failure detection signal Sd is low, the switch 33 outputs the switch drive signals Sa1 to Sa18 generated by the first drive control unit 31 as the switch drive signals S1 to S18.

On the other hand, when the power failure detection signal Sd is high, the switch 33 outputs switch drive signals Sb1 to Sb18 generated by the second drive control unit 32 as the switch drive signals S1 to S18.

Thus, when the voltage of the power grid 2 becomes low, the controller 30 performs the power conversion control to turn on the first directional switching element in one of the bidirectional switches Sw1 to Sw9, i.e., the unidirectional switching elements 13, and the second directional switching element in one of the bidirectional switches Sw1 to Sw9, i.e., the unidirectional switching elements 14, by the switch drive signals Sb1 to Sb18 outputted from the second drive control unit 32. Accordingly, even when the voltage of the power grid 2 becomes low, it is possible to continue the power conversion operation.

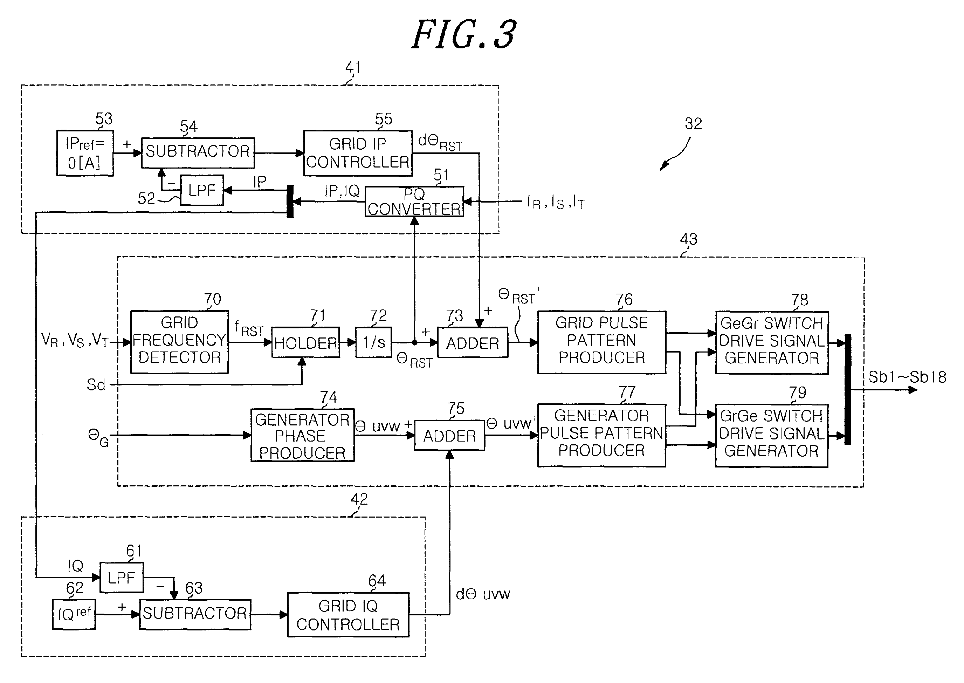

Hereinafter, an example of a specific configuration of the second drive control unit 32 will be described in detail with reference to FIG. 3. As shown in FIG. 3, the second drive control unit 32 includes an active current compensator 41, a reactive current compensator 42 and a pulse pattern generator 43.

First, the active current compensator 41 will be described. The active current compensator 41 includes a PQ converter 51, a low pass filter (LPF) 52, a grid active current commander 53, a subtractor 54 and a grid active current controller 55. The active current compensator 41 generates a grid phase compensation value $d\theta_{RST}$ so as to make the grid active current value identical to a grid active current command IPref, and outputs the generated grid phase compensation value $d\theta_{RST}$ to the pulse pattern generator 43.

The PQ converter 51 converts the grid phase current values $I_R$, $I_S$ and $I_T$ into $\alpha\beta$ components of two orthogonal axes on the fixed coordinate system, and obtains a grid current value $I_\alpha$ on the $\alpha$-axis and a grid current value $I_\beta$ on the $\beta$-axis. Further, the PQ converter 51 obtains a grid active current IP and a grid reactive current IQ by converting the $\alpha\beta$-components on the orthogonal coordinate system into components on a rotational coordinate system in which a coordinate rotates in accordance with a voltage phase $\theta_{RST}$ of the power grid 2 (hereinafter, referred to as "grid phase $\theta_{RST}$").

For example, the PQ converter 51 obtains the grid active current IP and the grid reactive current IQ by performing a calculation of Eq. (1).

$$\begin{bmatrix} IP \\ IQ \end{bmatrix} = \begin{bmatrix} \cos\theta_{RST} & -\sin\theta_{RST} \\ \sin\theta_{RST} & \cos\theta_{RST} \end{bmatrix} \begin{bmatrix} 1 & -1/2 & -1/2 \\ 0 & \sqrt{2/3} & -\sqrt{3/2} \end{bmatrix} \begin{bmatrix} I_R \\ I_S \\ I_T \end{bmatrix} \quad \dots\dots\dots (1)$$

The LPF 52 removes a high frequency component from the grid active current IP and outputs it to the subtractor 54. Accordingly, the influence of switching noise is eliminated from the grid active current IP.

The subtractor 54 calculates a grid active current error that is a difference between the grid active current IP and the grid active current command IPref by subtracting the output of the LPF 52 from the grid active current command IPref outputted from the grid active current commander 53, and outputs it to the grid active current controller 55.

The grid active current controller 55 may be constituted by, for example, a proportional-integral (PI) controller. Accordingly, the grid active current controller 55 generates the grid phase compensation value $d\theta_{RST}$ for causing the grid active current error to become zero by performing a proportional integral calculation. In this case, the grid active current command IPref is set to zero, and the grid active current controller 55 generates the grid phase compensation value $d\theta_{RST}$ for causing the grid active current IP to become zero.

Next, the reactive current compensator 42 will be described. The reactive current compensator 42 includes a low pass filter (LPF) 61, a grid reactive current commander 62, a subtractor 63 and a grid reactive current controller 64. The reactive current compensator 42 generates a generator phase compensation value $d\theta_{uvw}$ for causing the grid reactive current value to be identical to a grid reactive current command IQref, and outputs the generated generator phase compensation value $d\theta_{uvw}$ to the pulse pattern generator 43.

The subtractor 63 calculates a grid reactive current error that is a difference between the grid reactive current IQ and the grid reactive current command IQref by subtracting an output of the LPF 61 from the grid reactive current command IQref outputted from the grid reactive current commander 62, and outputs it to the grid reactive current controller 64.

The grid reactive current controller 64 may be constituted by, for example, a PI controller. Accordingly, the grid reactive current controller 64 generates the generator phase compensation value $d\theta_{uvw}$ for causing the grid reactive current error to become zero by performing a proportional integral calculation. The grid reactive current command IQref may be, for example, a value based on the grid voltage value Va.

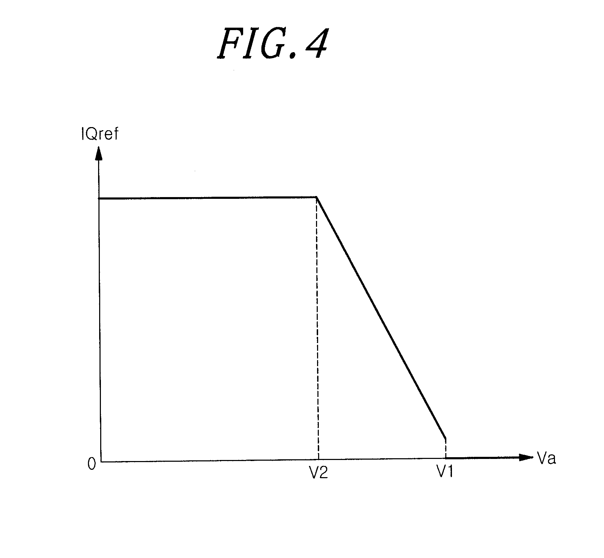

Referring to FIG. 4, an example of a relationship between the grid reactive current command IQref and the grid voltage value Va is illustrated. As shown in FIG. 4, the grid reactive current commander 62 generates the grid reactive current command IQref whose value decreases linearly as the grid voltage value Va increases while the grid voltage value Va is greater than a voltage value V2 that is a second threshold value and is not more than the voltage value V1 that is a first threshold value.

Further, the grid reactive current commanding unit 62 generates the grid reactive current command IQref whose value is maximum if the grid voltage value Va is not more than the voltage value V2, and is zero if the grid voltage value Va exceeds the voltage value V1. Further, the relationship between the grid reactive current command IQref and the grid voltage value Va may be a different relationship without being limited to the example shown in FIG. 4.

Next, the pulse pattern generator 43 shown in FIG. 3 will be described. The pulse pattern generator 43 generates the switch drive signals S1 to S18 for driving the bidirectional switches Sw1 to Sw9 based on the grid phase voltage values $V_R$, $V_S$ and $V_T$, the rotational position $\theta_G$, the grid phase compensation value $d\theta_{RST}$, the generator phase compensation value $d\theta_{uvw}$, the power failure detection signal Sd.

The pulse pattern generator 43 includes a grid frequency detector 70, a holder 71, an integrator 72, adders 73 and 75, and a generator phase producer 74. Further, the pulse pattern generator 43 includes a grid pulse pattern producer 76, a generator pulse pattern producer 77, a GeGr switch drive signal generator 78 and a GrGe switch drive signal generator 79.

The grid frequency detector 70 may be formed of, for example, a Phase Locked Loop (PLL) and outputs a grid frequency $f_{RST}$ synchronized with a voltage frequency of the power grid 2 based on the grid phase voltage values $V_R$, $V_S$ and $V_T$.

The holder 71 holds the grid frequency $f_{RST}$ outputted from the grid frequency detector 70 when the level of the power failure detection signal Sd is changed from low to high. On the contrary, the holder 71 releases holding of the grid frequency $f_{RST}$ when the level of the power failure detection signal Sd is changed from high to low.

The integrator 72 generates the grid phase $\theta_{RST}$ by integrating the grid frequency $f_{RST}$ outputted from the holder 71, and outputs it to the active current compensator 41 and the adder 73. The adder 73 generates a grid correction phase $\theta_{RST}$' by adding the grid phase compensation value $d\theta_{RST}$ to the grid phase $\theta_{RST}$, and outputs the generated grid correction phase $\theta_{RST}$' to the grid pulse pattern producer 76.

The generator phase producer 74 generates a generator phase $\theta uvw$ by multiplying the rotational position $\theta_G$ by the number of pole pairs of the rotational machine 3, and outputs it the adder 75. The adder 75 generates a generator correction phase $\theta uvw$' by adding the generator phase compensation value $d\theta uvw$ to the generator phase $\theta uvw$, and outputs the generated generator correction phase $\theta uvw$' to the generator pulse pattern producer 77.

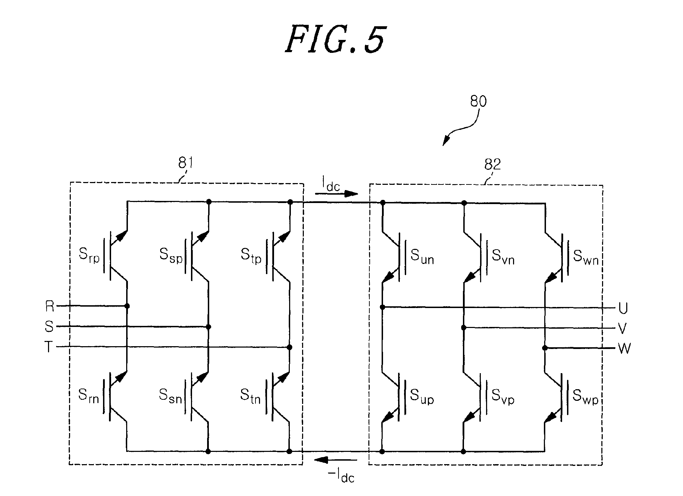

The pulse pattern generator 43 may use a current type inverter model as shown in FIG. 5 to generate the switch drive signals Sb1 to Sb18 for controlling a plurality of bidirectional switches. Specifically, the pulse pattern generator 43 generates the switch drive signals Sb1 to Sb18 by combining switch drive signals for an inverter (hereinafter, referred to as "inverter drive signals") and switch drive signals for a converter (hereinafter, referred to as "converter drive signals") in the current type inverter model.

The current type inverter model 80 shown in FIG. 5 is a model that includes a converter 81 and an inverter 82. The converter 81 includes a plurality of switching elements connected in full-bridge to the R-phase, S-phase and T-phase of the power grid 2. The switching elements of the converter 81 are driven by the converter drive signals Srp, Ssp, Stp, Srn, Ssn, Stn.

The inverter 82 includes a plurality of switching elements connected in full-bridge to the U-phase, V-phase and W-phase of the rotational machine 3. The switching elements of the inverter 82 are driven by the inverter drive signals Sup, Svp, Swp, Sun, Svn, Swn.

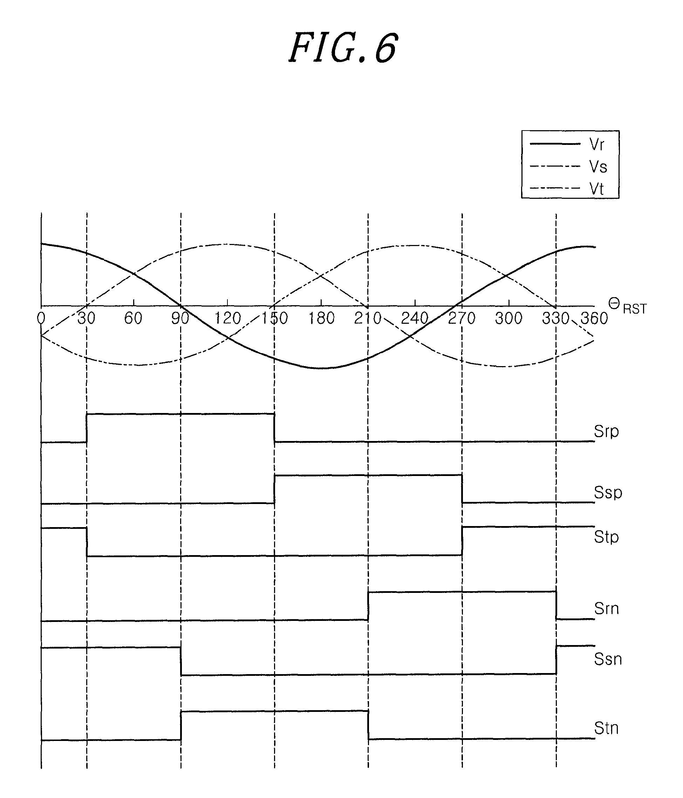

The grid pulse pattern producer 76 has a pattern of the converter drive signals Srp to Stn which causes a 120° conduction current to flow with respect to the grid phase $\theta_{RST}$, and generates the converter drive signals Srp to Stn according to the grid correction phase $\theta_{RST}$'. FIG. 6 is a diagram showing a relationship between the grid phase $\theta_{RST}$ and the converter drive signals Srp to Stn, that is a relationship between the grid phase $\theta_{RST}$ and the converter drive signals Srp to Stn for flowing a 120° conduction current delayed by 90° with respect to the grid phase $\theta_{RST}$.

The grid correction phase $\theta_{RST}$' is generated by adding the grid phase compensation value $d\theta_{RST}$, which causes the grid active current IP to become zero, to the grid phase $\theta_{RST}$. Accordingly, the grid pulse pattern producer 76 generates the converter drive signals Srp to Stn based on the grid correction phase $\theta_{RST}$'. Thus, a reactive current delayed by 90° with respect to the grid phase can flow while the grid active current IP is zero, to the power grid 2.

The grid pulse pattern producer 76 generates the converter drive signals Srp to Stn for turning on the first directional switching element of one of the bidirectional switches Sw1-Sw9 and the second directional switching element of another one of the bidirectional switches Sw1-Sw9 to thereby allow the current to flow in two phases of the power grid 2. For example, in the range of $330° \leq \theta_{RST} < 360°$ and $0° \leq \theta_{RST} < 30°$, the switch drive signals Stp and Ssn are high, and the other signals are low. Thus, the current flows in the T-phase and S-phase of the power grid 2.

Similarly, in the range of $30° \leq \theta_{RST} < 90°$, the switch drive signals Srp and Ssn are high, and the current flows in the R-phase and S-phase. In the range of $90° \leq \theta_{RST} < 150°$, the switch drive signals Srp and Stn are high, and the current flows in the R-phase and T-phase. In the range of $150° \leq \theta_{RST} < 210°$, the switch drive signals Ssp and Stn are high, and the current flows in the S-phase and T-phase.

In the range of $210° \leq \theta_{RST} < 270°$, the switch drive signals Ssp and Srn are high, and the current flows in the S-phase and R-phase. In the range of $270° \leq \theta_{RST} < 330°$, the switch drive signals Stp and Srn are high, and the current flows in the T-phase and R-phase. In this way, the grid pulse pattern producer 76 generates a pulse pattern which causes a current having a phase delayed by 90° with respect to the grid phase to flow.

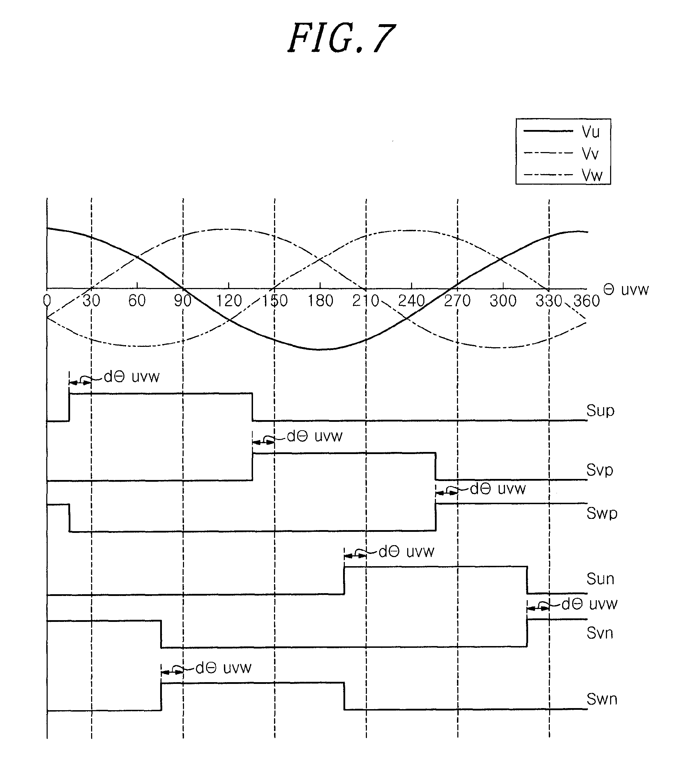

The generator pulse pattern producer 77 generates the inverter drive signals Sup to Swn according to the generator correction phase θuvw'. FIG. 7 shows a relationship between the generator phase θuvw and the inverter drive signals Sup to Swn.

The generator pulse pattern producer 77 has a pattern of the inverter drive signals Sup to Swn which causes a 120° conduction current to flow with respect to the generator phase θuvw, and outputs the inverter drive signals Sup to Swn according to the generator correction phase θuvw'.

The generator correction phase θuvw' is obtained by adding the generator phase compensation value dθuvw, which makes the grid reactive current error become zero, to the generator phase θuvw. As mentioned above, the generator pulse pattern producer 77 generates the inverter drive signals Sup to Swn based on the generator correction phase θuvw'. Thus, as shown in FIG. 7, the generator pulse pattern producer 77 outputs the inverter drive signals Sup to Swn so that a current delayed by 90°-dθuvw with respect to the generator phase θuvw, that is, a current having a phase with 90° delay to the generator phase θuvw and with dθuvw lead to the reactive current command, can flow. As a result, a reactive current having a magnitude equal to the grid reactive current command IQref can flow to the power grid 2.

The generator pulse pattern producer 77 generates the inverter drive signals Sup to Swn for turning on the first directional switching element in one of the bidirectional switches Sw1-Sw9 and the second directional switching element in another one of the bidirectional switches Sw1-Sw9 to thereby allow the current to flow in two phases of the rotational machine 3. For example, in the range of $330° \leq \theta uvw + d\theta uvw < 360°$ and $0° \leq \theta uvw + d\theta uvw < 30°$, the inverter drive signals Swp and Svn are high, and the other signals are low. Thus, the current flows in the W-phase and V-phase of the rotational machine 3.

Similarly, in the range of $30° \leq \theta uvw + d\theta uvw < 90°$, the inverter drive signals Sup and Svn are high, and the current flows in the U-phase and V-phase. In the range of $90° \leq \theta uvw + d\theta uvw < 150°$, the switch drive signals Sup and Swn are high, and the current flows in the U-phase and W-phase. In the range of $150° \leq \theta uvw + d\theta uvw < 210°$, the switch drive signals Svp and Swn are high, and the current flows in the V-phase and W-phase.

In the range of $210° \leq \theta uvw + d\theta uvw < 270°$, the inverter drive signals Svp and Sun are high, and the current flows in the V-phase and U-phase. In the range of $270° \leq \theta uvw + d\theta uvw < 330°$, the inverter drive signals Swp and Sun are high, and the current flows in the W-phase and U-phase. In this way, the generator pulse pattern producer 77 generates a pulse pattern such that a current having a phase delayed by 90°-dθuvw with respect to the generator phase θuvw can flow.

The GeGr switch drive signal generator 78 generates the switch drive signals Sur, Sus, Sut, Svr, Svs, Svt, Swr, Sws, Swt using the following Eq. (2) based on the converter drive signals Srn, Ssn, Stn and the inverter drive signals Sup, Svp, Swp.

$$\begin{bmatrix} Sur & Svr & Swr \\ Sus & Svs & Sws \\ Sut & Svt & Swt \end{bmatrix} = \begin{bmatrix} Srn \\ Ssn \\ Stn \end{bmatrix} \begin{bmatrix} Sup & Svp & Swp \end{bmatrix} \qquad \cdots\cdots\cdots (2)$$

In the above Eq. (2), the switch drive signals Sur, Sus, Sut, Svr, Svs, Svt, Swr, Sws, Swt are signals for driving the first directional switching elements of the bidirectional switches Sw1 to Sw9, for example, the unidirectional switching elements 13, as shown in FIG. 8. FIG. 8 shows a configuration example of the switching unit 22 in which the configuration of the bidirectional switches Sw1 to Sw9 is different from the example shown in FIG. 2. That is, the bidirectional switches Sw1 to Sw9 shown in FIG. 8 have a configuration in which the collectors of the unidirectional switching elements 13 and 14 are commonly connected to cathodes of the diodes 15 and 16 unlike the bidirectional switches Sw1 to Sw9 shown in FIG. 2. In either case, the operation of the bidirectional switches Sw1 to Sw9 shown in FIG. 8 is the same as the operation of the bidirectional switches Sw1 to Sw9 shown in FIG. 2.

The GrGe switch drive signal generator 79 generates the switch drive signals Sru, Ssu, Stu, Srv, Ssv, Stv, Srw, Ssw, Stw by using the following Eq. (3) based on the inverter drive signals Sun, Svn and Swn and the converter drive signals Srp, Ssp and Stp.

$$\begin{bmatrix} Sru & Srv & Srw \\ Ssu & Ssv & Ssw \\ Stu & Stv & Stw \end{bmatrix} = \begin{bmatrix} Srp & Ssp & Stp \end{bmatrix} \begin{bmatrix} Sun \\ Svn \\ Swn \end{bmatrix} \quad \cdots\cdots\cdots\cdots (3)$$

In the above Eq. (3), the switch drive signals Sru, Ssu, Stu, Srv, Ssv, Stv, Srw, Ssw, Stw are signals for driving the second directional switching elements of the bidirectional switches Sw1 to Sw9, for example, the unidirectional switching elements 14 as shown in FIG. 8.

The generated switch drive signals Sur, Sru, Sus, Ssu, Sut, Stu, Svr, Srv, SVs, Ssv, Svt, Stv, Swr, Srw, Sws, Ssw, Swt, Stw are related to the switch drive signals S1 to S18 as shown in FIG. 8 and outputted to the switching unit 22 through the switch 33 from the pulse pattern generator 43 when the power failure detection signal Sd is high.

Thus, among the unidirectional switching elements 13 and 14 of the bidirectional switches Sw1 to Sw9, it is possible to turn on the first directional switching element, for example, the unidirectional switching element 13 in one of the bidirectional switches Sw1-Sw9 and the second directional switching element, for example, the unidirectional switching element 14 in another one of the bidirectional switches Sw1-Sw9 to thereby allow a current to flow in the two phases of the power grid 2 and the two phases of the rotational machine 3.

Further, one of the converter drive signals Srn, Ssn, Stn and one of the inverter drive signals Sup, Svp, Swp are in high level at any time. Accordingly, among the unidirectional switching elements 13 and 14 of the bidirectional switches Sw1 to Sw9, one unidirectional switching element 13 for allowing a current to flow from the rotational machine 3 to the power grid 2 is turned on.

Further, one of the inverter drive signals Sun, Svn, Swn and one of the converter drive signals Srp, Ssp, Stp are in high level at any time. Accordingly, among the unidirectional switching elements 13 and 14 of the bidirectional switches Sw1 to Sw9, one unidirectional switching element for allowing a current to flow from the power grid 2 to the rotational machine 3 is turned on.

As described above, the controller 30 of the matrix converter 1 in accordance with the present embodiment includes the first drive control unit 31 and the second drive control unit 32. The controller 30 performs power conversion by the voltage control performed by selectively turning on the bidirectional switches Sw1 to Sw9. In the present embodiment, the first drive control unit 31 turns on both of the unidirectional switching elements 13 and 14 in the respective selected bidirectional switches Sw1 to Sw9. Further, the second drive control unit 32 turns on one of the unidirectional switching elements 13 and 14 in the respective selected bidirectional switches Sw1 to Sw9. Further, when the voltage of the power grid 2 exceeds a predetermined value, the matrix converter 1 performs the power conversion control by using the first drive control unit 31, and when the voltage of the power grid 2 is not more than a predetermined value, the matrix converter 1 performs the power conversion control by using the second drive control unit 32. Thus, even when the voltage of the power grid 2 becomes low, the matrix converter 1 can continue a power conversion operation while causing a reactive current to flow to the power grid 2.

In a power generation system, when the voltage of the power grid 2 becomes low due to a power failure or the like, it may be required to supply a reactive power to the power grid 2. The matrix converter 1 in accordance with the present embodiment can respond appropriately to such request.

In the case where a grid reactive current command IQref defining a magnitude of reactive power is transmitted from the administrator side of the power grid 2, the transmitted grid reactive current command IQref may be outputted to the subtractor from the grid reactive current commander 62. With this configuration, it is possible to set the magnitude of reactive current of the power grid 2 externally.

Further, the second drive control unit 32 employs the current type inverter model 80 as a switching model. A switching pattern of a 120° conduction current, which causes a current delayed by 90° with respect to the grid voltage phase, is applied to the converter 81, and a switching pattern of a 120° conduction current with a phase causing a reactive current having a magnitude corresponding to the grid reactive current command IQref, is applied to the inverter 82. The switching pattern applied to the converter 81 and the switching pattern applied to the inverter 82 are combined and outputted as a switch drive signal to the unidirectional switching elements 13 and 14 of the bidirectional switches Sw1 to Sw9.

With this configuration, switch drive signals are outputted to one of the unidirectional switching elements 13 and 14 in the bidirectional switches Sw1 to Sw9. Therefore, the reactive current of a magnitude corresponding to the grid reactive current command IQref can easily and accurately flow to the power grid 2.

Further, in the above-described first embodiment, the grid pulse pattern producer 76 may generate a pulse pattern which causes a current having a phase advanced by 90° with respect to the grid phase to flow. Thus, a reactive current having a magnitude equal to the grid reactive current command IQref can flow to the power grid 2. Furthermore, whether the reactive current flowing to the power grid 2 is delayed by 90° or advanced by 90° may be selected, for example, by setting the grid pulse pattern producer 76 through manipulation from the outside.

(Second Embodiment)

Next, a matrix converter in accordance with a second embodiment will be described. The matrix converter in accordance with the present embodiment is configured as a series-connected multilevel matrix converter 1a. Configurations of power conversion unit 10a and a controller 30a are different from those of the first embodiment, and the others are the same as those of the first embodiment. Hereinafter, the same or similar reference numerals are given to the same or similar components, and the present embodiment will be described focusing on the different parts.

The series-connected multilevel matrix converter 1a includes a multi-winding transformer 100; power cell units 21u, 21v, 21w provided for respective phases of a rotational machine 3; a current detector 24; a voltage detector 25; a power failure detector 26; and the controller 30a. Further, the series-connected multilevel matrix converter 1a has grid side terminals $T_R$, $T_S$ and $T_T$ and generator side terminals $T_U$, $T_V$ and $T_W$. The power grid 2 is connected to the grid side terminals $T_R$, $T_S$ and $T_T$ and the rotational machine 3 is connected to the generator side terminals $T_U$, $T_V$ and $T_W$.

The multi-winding transformer 100 includes a primary winding 11 and nine secondary windings 12a to 12i (hereinafter, collectively referred to as secondary windings 12 in some cases). AC power inputted to the primary winding 11 from the power grid 2 is transformed and outputted from the nine secondary windings 12a to 12i. Further, the nine secondary windings 12a to 12i serve as separate AC power sources, and are respectively connected to power cells 21a to 21i to be described later.

Each of the power cells 21 performs power conversion between a terminal T3 connected to the secondary windings 12, and terminals T1 and T2. Herein, the terminal T3 includes terminals Tr, Ts, Tt to be described later.

Each of the power cell units 21u, 21v and 21w includes the three power cells 21 connected in series. That is, the U-phase power cell unit 21u includes the power cells 21a, 21d and 21g connected in series, and the V-phase power cell unit 21v includes the power cells 21b, 21e and 21h connected in series. Further, the W-phase power cell unit 21W includes the power cells 21c, 21f and 21i connected in series.

Specifically, in the power cell unit 21u, the terminal T2 of the power cell 21a is connected to the neutral point N. Further, the terminal T1 of the power cell 21a is connected to the terminal T2 of the power cell 21d, and the terminal T1 of the power cell 21d is connected to the terminal T2 of the power cell 21g. Thus, the U-phase power cell unit 21u uses the terminal T1 of the power cell 21g as an output terminal thereof.

Similarly, in the power cell unit 21v, the terminal T2 of the power cell 21b is connected to the neutral point N. Further, the terminal T1 of the power cell 21b is connected to the terminal T2 of the power cell 21e, and the terminal T1 of the power cell 21e is connected to the terminal T2 of the power cell 21h. Thus, the V-phase power cell unit 21v uses the terminal T1 of the power cell 21h as an output terminal thereof.

Further, in the power cell unit 21w, the terminal T2 of the power cell 21c is connected to the neutral point N. The terminal T1 of the power cell 21c is connected to the terminal T2 of the power cell 21f, and the terminal T1 of the power cell 21f is connected to the terminal T2 of the power cell 21i. Thus, the W-phase power cell unit 21w uses the terminal T1 of the power cell 21i as an output terminal thereof.

The power cells 21a to 21c, whose terminals T2 are connected to a neutral point (N), are referred to as 'first layer power cells', the power cells 21d to 21f, whose terminals are respectively connected to terminals T1 of the first layer power cells 21a to 21c, are referred to as 'second layer power cells', and the power cells 21g to 21i, whose terminals T1 are respectively connected to the generator side terminals $T_U$, $T_V$ and $T_W$, are referred to as 'third layer power cells'.

Further, the secondary windings 12a to 12c are respectively connected to the first layer power cells 21a to 21c, and the secondary windings 12d to 12f are respectively connected to the second layer power cells 21d to 21f, and the secondary windings 12g to 12i are respectively connected to the third layer power cells 21g to 21i. In the present embodiment, voltages of the secondary windings 12a to 12c respectively connected to the first layer power cells 21a to 21c are referred to as 'first layer voltages', voltages of the secondary windings 12d to 12f respectively connected to the second layer power cells 21d to 21f are referred to as 'second layer voltages', and voltages of the secondary windings 12g to 12i respectively connected to the third layer power cells 21g to 21i are referred to as 'third layer voltages'.

The multi-winding transformer 100 may be a phase-shifting transformer which generates voltage phase differences between the primary winding 11 and at least some of the secondary windings 12. In the multi-winding transformer 100 of the present embodiment, phases of the first to third level voltages outputted from the three secondary windings 12 respectively connected to the power cell units 21u, 21v, 21w are shifted by 20 degrees in the order from the neutral point, as shown in the following Table 1, for example. In Table 1 below, the voltage phase differences between the primary winding 11 and respective level voltages of the secondary windings 12 are illustrated.

<Table 1>

|  | phase difference (degrees) |
| --- | --- |
| first level voltage (r1, s1, t1) | 0 |
| second level voltage (r2, s2, t2) | 20 |
| third level voltage (r3, s3, t3) | 40 |

Specifically, in the U-phase, a voltage phase of the secondary winding 12d connected to the power cell 21d is shifted by 20 degree with respect to that of the secondary winding 12a connected to the power cell 21a, and a voltage phase of the secondary winding 12g connected to the power cell 21g is shifted by 20 degree with respect to that of the secondary winding 12d. Similarly, in the V-phase, a voltage phase of the secondary winding 12e connected to the power cell 21e is shifted by 20 degree with respect to that of the secondary winding 12b connected to the power cell 21b, and a voltage phase of the secondary winding 12h connected to the power cell 21h is shifted by 20 degree with respect to that of the secondary winding 12e.

Further, in the W-phase, a voltage phase of the secondary winding 12f connected to the power cell 21f is shifted by 20 degree with respect to that of the secondary winding 12c connected to the power cell 21c, and a voltage phase of the secondary winding 12i connected to the power cell 21i is shifted by 20 degree with respect to that of the secondary winding 12f. The power cells 21a-21i provided for the respective phases may be collectively referred to as power cells 21 in the following description.

In the present embodiment, a voltage phase difference between the primary winding 11 and the secondary windings 12a to 12c is set to zero. Thus, the voltage phase (hereinafter described as a first voltage phase $\theta rst1$) of r1 phase, s1 phase and t1 phase of the secondary windings 12a to 12c is the same as the voltage phase $\theta_{RST}$ (hereinafter described as "grid phase $\theta_{RST}$") of the power grid 2. Further, the voltage phase (hereinafter described as a second voltage phase $\theta rst2$) of r2 phase, s2 phase and t2 phase of the secondary windings 12d to 12f is shifted by 20° with respect to the grid phase $\theta_{RST}$. Further, the voltage phase (hereinafter described as a third voltage phase $\theta rst3$) of r3 phase, s3 phase and t3 phase of the secondary windings 12g to 12i is shifted by 40° with respect to the grid phase $\theta_{RST}$.

By providing the voltage phase difference as such, it is possible to reduce a harmonic current flowing in the primary winding 11. The voltage phase differences shown in Table 1 are exemplary, and may have other values. Further, it is not necessary to provide a phase difference. It is also possible to connect a separate AC power supply to each of the power cells 21a to 21i without using the multi-winding transformer 100.

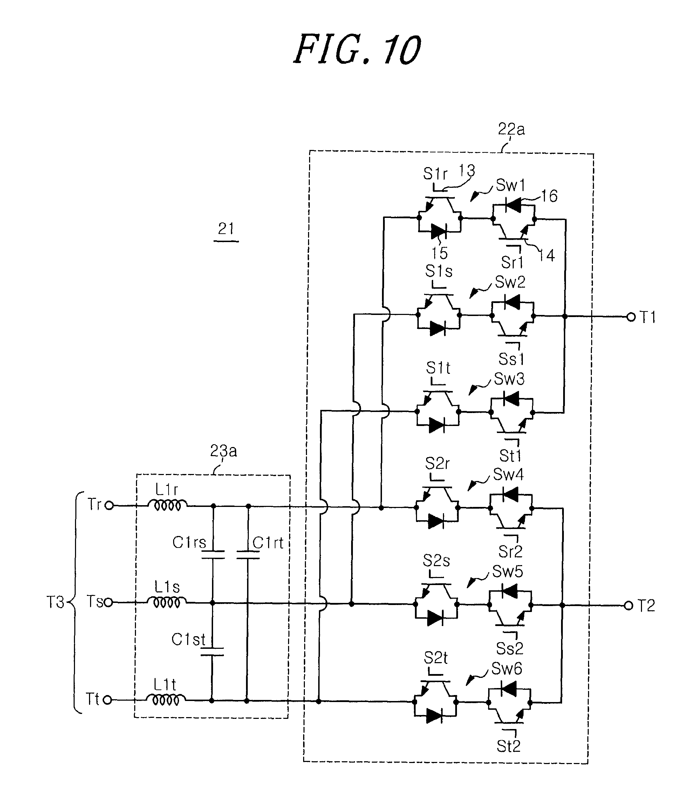

The configuration of each power cell 21 will be described. FIG. 10 shows an example of a specific configuration of the power cell 21. As shown in FIG. 10, the power cell 21 includes a switch unit 22a and a filter 23a. The power cell 21 is also referred to as a single phase matrix converter. In the power cell 21, for example, a snubber circuit (not shown) may be provided.

In the present embodiment, the switch unit 22a includes bidirectional switches Sw1 to Sw6 as shown in FIG. 10. The bidirectional switches Sw1 to Sw3 respectively connect the terminals Tr, Ts and Tt to the terminal T1, and the bidirectional switches Sw4 to Sw6 respectively connect the terminals Tr, Ts and Tt to the terminal T2.

The bidirectional switches Sw1 to Sw6 are identical with those described with reference to FIG. 8 in the first embodiment other than that the number of the bidirectional switches is six and a redundant description will be omitted.

The filter 23a, provided between the switch unit 22a and the terminals Tr, Ts and Tt, suppresses the influence of high-frequency components (PWM components) generated by the switch unit 22a, on the power grid 2. The filter 23a includes three reactors L1r, L1s and L1t, and three capacitors C1rs, C1st and C1rt.

One ends of the reactors L1r, L1s and L1t are respectively connected to the terminals Tr, Ts and Tt, and the other ends thereof are connected to the switch unit 22a. Further, the capacitors C1rs, C1st and C1rt are respectively connected between the different three pairs of the other ends of the reactors L1r, L1s and L1t. Further, the filter 23a is not limited to the configuration shown in FIG. 10, and for example, the reactors L1r, L1s and L1t may not be provided.

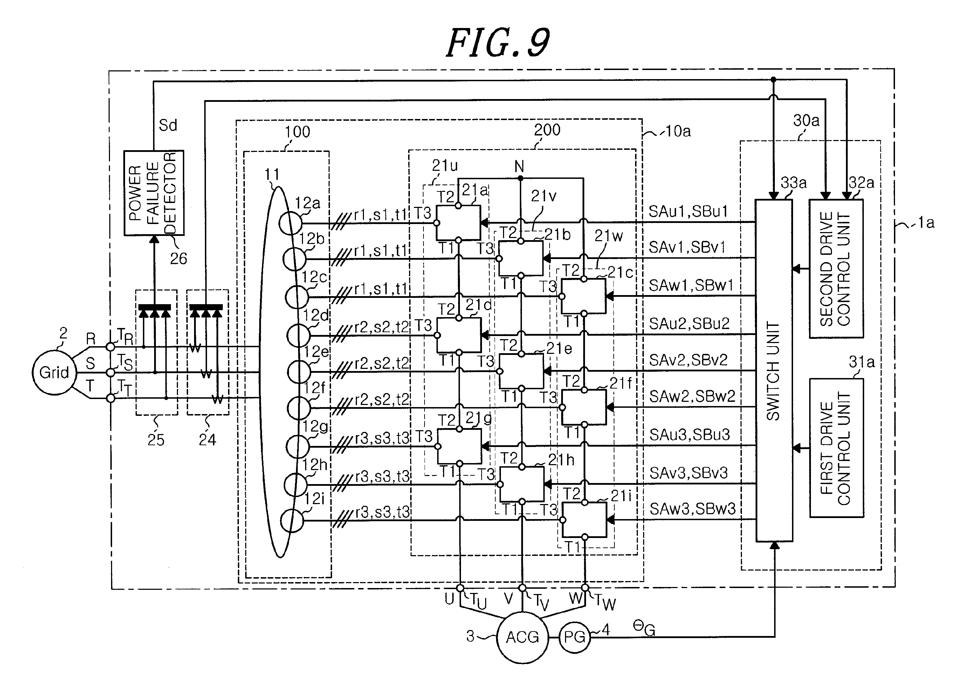

Referring back to FIG. 9, the description of the configuration of the series-connected multilevel matrix converter 1a will be continued. The current detector 24, provided between the power grid 2 and the multi-winding transformer 100, detects instantaneous current values $I_R$, $I_S$ and $I_T$ (hereinafter described as "grid phase current values $I_R$, $I_S$ and $I_T$") of phase currents flowing between the power grid 2 and the multi-winding transformer 100. Further, the current detector 24 may be, for example, a current sensor that detects a current by using a magneto-electric transducer such as a Hall element.

The voltage detector 25, provided between the power grid 2 and the multi-winding transformer 100, detects instantaneous voltage values $V_R$, $V_S$ and $V_T$ (hereinafter, referred to as "grid phase voltage values $V_R$, $V_S$ and $V_T$") of the R-phase, S-phase and T-phase of the power grid 2.

The power failure detector 26 detects that a grid voltage value Va detected by the voltage detector 25 is not more than a voltage value V1, as in the first embodiment. If the grid voltage value Va is not more than the voltage value V1, the power failure detector 26a determines that a power failure occurs in the power grid 2, and outputs a power failure detection signal Sd of high level. Alternatively, the power failure may be detected based on the voltage of one of the secondary windings 12a to 12i. For example, if a secondary voltage Va1 is not more than a predetermined voltage value V11, the power failure detector may determine that a power failure occurs in the power grid 2 and output a power failure detection signal Sd of high level. On the contrary, if the secondary voltage Va1 exceeds the voltage value V11, the power failure detector may determine that a power failure does not occurs in the power grid 2, and output a power failure detection signal Sd of low level.

In this case, the power failure detector converts, for example, the voltages Vr1, Vs1 and Vt1 of the r1-phase, s1-phase and t1-phase of the secondary winding 12a into $\alpha\beta$ components of two orthogonal axes on the fixed coordinates, and obtains a grid voltage value $V_{\alpha 1}$ in the $\alpha$-axis direction and a grid voltage value $V_{\beta 1}$ in the $\beta$-axis direction. Then,

the power failure detector calculates a square root of sum of squares $\left(=\sqrt{(V_{\alpha}^2 + V_{\beta}^2)}\right)$ of the grid voltage values

$V_{\alpha 1}$ and $V_{\beta 1}$ and obtains a calculation result as a secondary voltage value Va1.

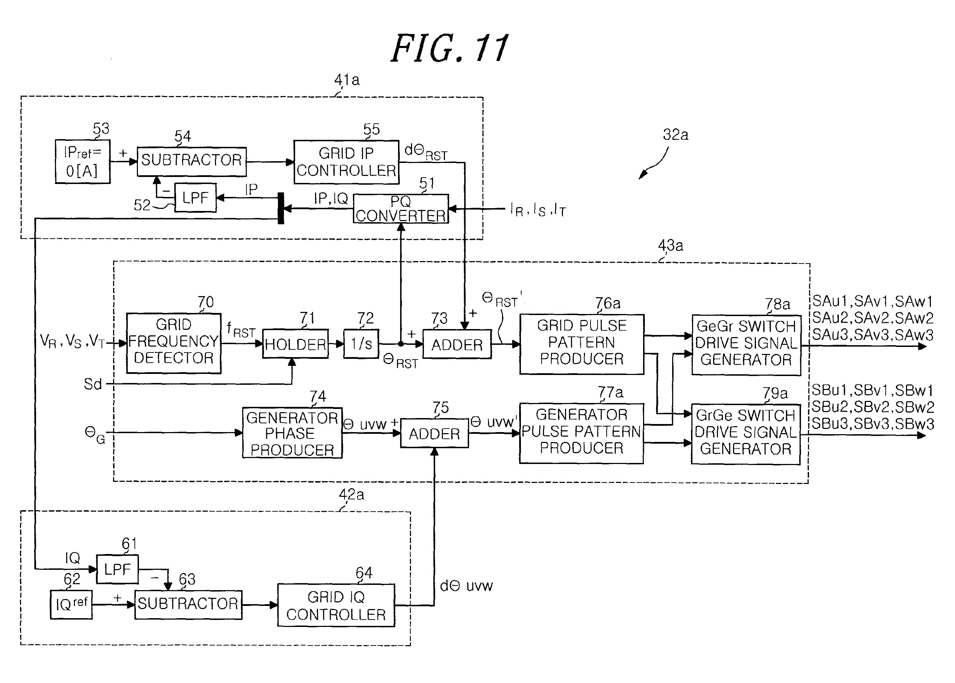

Basic configuration and operation of the controller 30a are the same as those of the first embodiment, and there is a difference in that, in the power power failure, the second drive control unit 32a generates switch drive signals for driving the bidirectional switches Sw1 to Sw6 of the respective power cells to allow a current to flow in two phases of the secondary winding and two phases of the rotational machine. Specifically, as shown in FIG. 11, the pulse pattern generator 43a generates switch drive signals SAu1 to Saw3 and SBu1 to SBw3, and, in the following description, the embodiment will be described focusing on this.

A pulse pattern generator 43a generates the switch drive signals by using the current type inverter model shown in FIG. 5 as in the first embodiment.

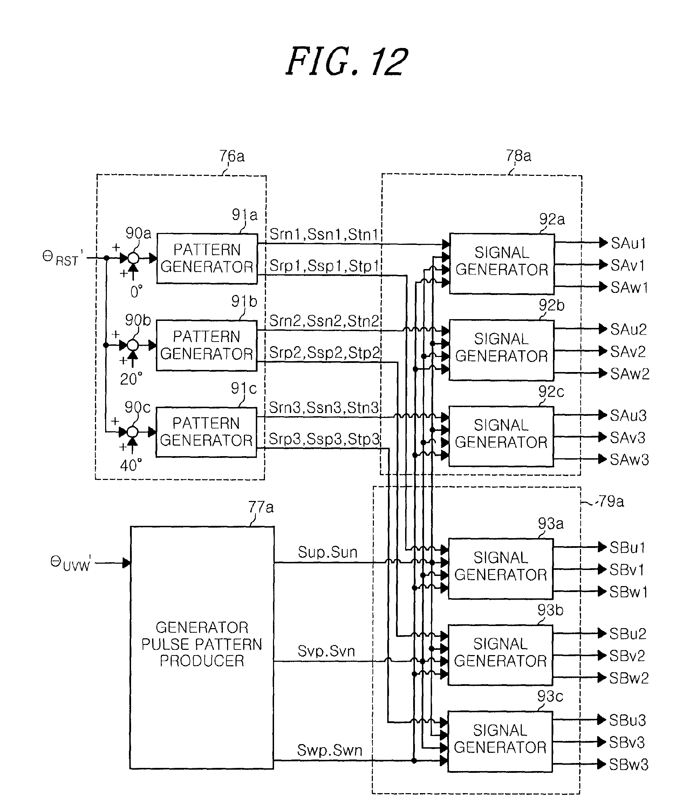

FIG. 12 illustrates configurations of a grid pulse pattern producer 76a, a GeGr switch drive signal generator 78a and a GrGe switch drive signal generator 79a. As shown in FIG. 12, the grid pulse pattern producer 76a includes adders 90a to 90c and pattern generators 91a to 91c.

The adders 90a to 90c add, to the grid correction phase $\theta_{RST}$', the phases corresponding to the voltage phase differences (see, for example, Table 1) between the primary winding 11 and the secondary windings 12 of the multi-winding transformer 100, respectively, and output the addition results to the pattern generators 91a to 91c. Specifically, the adder 90a adds a phase of 0° to the grid correction phase $\theta_{RST}$', the adder 90b adds a phase of 20° to the grid correction phase $\theta_{RST}$', and the adder 90c adds a phase of 40° to the grid correction phase $\theta_{RST}$'.

As described above, the voltage phase differences between the primary winding 11 and the secondary windings 12 are not limited to the example shown in Table 1. For example, the phase difference between the primary winding 11 and the secondary windings 12a to 12c may be 10°, the phase difference between the primary winding 11 and the secondary windings 12d to 12f may be 30°, and the phase difference between the primary winding 11 and the secondary windings 12g to 12i may be 50°. In this case, the adder 90a adds a phase of 10° to the grid correction phase $\theta_{RST}$', the adder 90b adds a phase of 30° to the grid correction phase $\theta_{RST}$', and the adder 90c adds a phase of 50° to the grid correction phase $\theta_{RST}$'.

The pattern generators 91a to 91c generate a pattern of the converter drive signals Srp to Stn for causing a 120° conduction current to flow with respect to the voltage phases θrst1 to θrst3 of the secondary windings 12 based on the addition results of the adders 90a to 90c. The pattern generators 91a to 91c have the same configuration. Specifically, the pattern generator 91a generates converter drive signals Srp1, Ssp1, Stp1, Srn1, Ssn1, Stn1 (hereinafter referred to as "converter drive signals Srp1 to Stn1") based on the addition result of the adder 90a.

Further, the pattern generator 91b generates converter drive signals Srp2, Ssp2, Stp2, Srn2, Ssn2, Stn2 (hereinafter referred to as "converter drive signals Srp2 to Stn2") based on the addition result of the adder 90b. Further, the pattern generator 91c generates converter drive signals Srp3, Ssp3, Stp3, Srn3, Ssn3, Stn3 (hereinafter referred to as "converter drive signals Srp3 to Stn3") based on the addition result of the adder 90c.

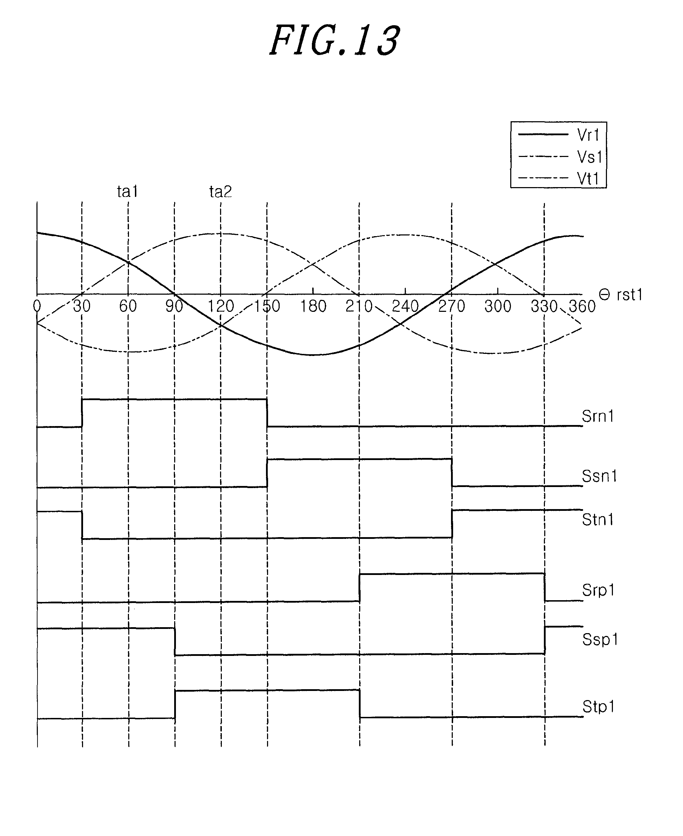

FIG. 13 illustrates a relationship between the converter drive signals Srp1 to Stn1 and the voltage phase θrst1 of the r1 phase, s1 phase and t1 phase of the secondary windings 12a to 12c, which represents a relationship between the voltage phase θrst1 and drive signals for causing a 120° conduction current with 90° phase lead to it.

The grid correction phase $\theta_{RST}$' is generated by adding the grid phase compensation value $d\theta_{RST}$ for making the grid active current IP zero, to the grid phase $\theta_{RST}$. Accordingly, the pattern generator 91a of the grid pulse pattern producer 76a generates the converter drive signals Srp1 to Stn1 based on the grid correction phase $\theta_{RST}$'. As a result, a reactive current with 90° phase lead can flow to the secondary windings 12 while the active current is zero.

The pattern generator 91a of the grid pulse pattern producer 76a generates the converter drive signals Srp1 to Stn1 for turning on the first directional switching elements of one or more of the bidirectional switches Sw1 - Sw6 and the second directional switching elements of another one or more of the bidirectional switches Sw1 - Sw6 so that the current can flow in two phases of r1 phase, s1 phase and t1 phase. For example, in the range of $0° \leq \theta rst1 < 30°$ and $330° \leq \theta rst1 < 360°$, the converter drive signals Stn1 and Ssp1 are high, and the other signals are low. Thus, a current flows between the t1-phase and s1-phase.

Similarly, in the range of $30° \leq \theta rst1 < 90°$, the converter drive signals Srn1 and Ssp1 are high, and a current flows between the r1-phase and s1-phase. In the range of $90° \leq \theta rst1 < 150°$, the converter drive signals Srn1 and Stp1 are high, and a current flows between the r1-phase and t1-phase. In the range of $150° \leq \theta rst1 < 210°$, the converter drive signals Ssn1 and Stp1 are high, and a current flows between the s1-phase and t1-phase.

In the range of $210° \leq \theta rst1 < 270°$, the converter drive signals Ssn1 and Srp1 are high, and a current flows between the s1-phase and r1-phase. In the range of $270° \leq \theta rst1 < 330°$, the converter drive signals Stn1 and Srp1 are high, and a current flows between the t1-phase and r1-phase. In this way, the pattern generator 91a of the grid pulse pattern producer 76a generates a pulse pattern to allow flowing of the current having a phase lead by 90° with respect to the voltage phase $\theta rst1$ in each of the secondary windings 12a to 12c.

The converter drive signals Srp2 to Stn2 are signals whose phases are respectively lead by 20° with respect to the converter drive signals Srp1 to Stn1, and each of them is of a pulse pattern which allows flowing of a current having a phase lead by 90° with respect to the voltage phase $\theta rst2$ in each of the secondary windings 12d to 12f.

Further, the converter drive signals Srp3 to Stn3 are signals whose phases are respectively lead by 40° with respect to the converter drive signals Srp1 to Stn1, and each of them is of a pulse pattern which allows flowing of a current having a phase lead by 90° with respect to the voltage phase $\theta rst3$ in each of the secondary windings 12g to 12i.

Thus, a reactive current advanced by 90° while an active current is zero can flow to the corresponding secondary windings 12a to 12i. As a result, a reactive current can flow to the power grid 2 while the grid active current IP is zero.

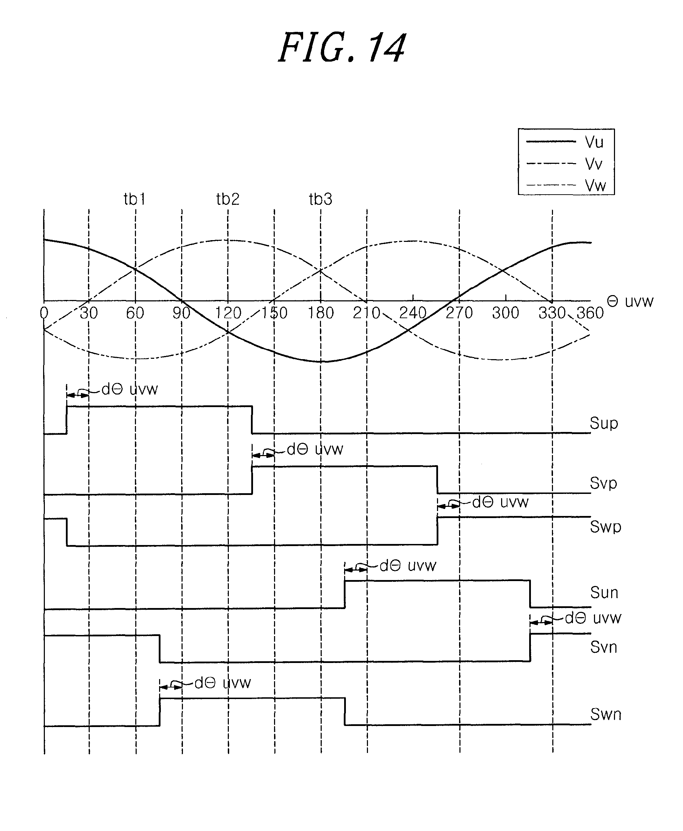

The generator pulse pattern producer 77a generates inverter drive signals Sup to Swn according to the generator correction phase $\theta uvw'$. FIG. 14 shows a relationship between the generator phase $\theta uvw$ and the inverter drive signals Sup to Swn.

The generator pulse pattern producer 77a has a pattern of the inverter drive signals Sup to Swn which causes a 120° conduction current with respect to the generator phase $\theta uvw$, and outputs the inverter drive signals Sup to Swn according to the generator correction phase $\theta uvw'$.

The generator correction phase $\theta uvw'$ is obtained by adding the generator phase correction value $d\theta uvw$ for causing the grid reactive current error to become zero, to the generator phase $\theta uvw$. Accordingly, as shown in FIG. 14, the generator pulse pattern producer 77a outputs the inverter drive signals Sup to Swn based on the generator correction phase $\theta uvw'$ so that a current with $90°$-$d\theta uvw$ phase delay to the generator phase $\theta uvw$ flows. Thus, a reactive current having a magnitude equal to the grid reactive current command IQref can flow to the power grid 2.

The generator pulse pattern producer 77a generates the inverter drive signals Sup to Swn to turn on the first directional switching elements in one or more of the bidirectional switches and the second directional switching elements in another one or more of the bidirectional switches so that the current can flow in two phases of the rotational machine 3. For example, in the range of $0° \leq \theta uvw + d\theta uvw < 30°$ and $330° \leq \theta uvw + d\theta uvw < 360°$, the inverter drive signals Swp and Svn are high, and the other signals are low. Thus, a current flows between the W-phase and V-phase.

Similarly, in the range of $30° \leq \theta uvw + d\theta uvw < 90°$, the inverter drive signals Sup and Svn are high, and a current flows between the U-phase and V-phase. In the range of $90° \leq \theta uvw + d\theta uvw < 150°$, the inverter drive signals Sup and Swn are high, and a current flows between the U-phase and W-phase. In the range of $150° \leq \theta uvw + d\theta uvw < 210°$, the inverter drive signals Svp and Swn are high, and a current flows between the V-phase and W-phase.

In the range of $210° \leq \theta uvw + d\theta uvw < 270°$, the inverter drive signals Svp and Sun are high, and a current flows between the V-phase and U-phase. In the range of $270° \leq \theta uvw + d\theta uvw < 330°$, the inverter drive signals Swp and Sun are high, and a current flows between the W-phase and U-phase. In this way, the generator pulse pattern producer 77a generates a pulse pattern so that a current having a phase delay of $90°$-$d\theta uvw$ with respect to the generator phase $\theta uvw$ can flow.

As shown in FIG. 12, the GeGr switch drive signal generator 78a includes signal generators 92a to 92c. The signal generators 92a to 92c generate switch drive signals S1r, S1s, S1t, S2r, S2s, S2t by using the following Eq. (4), based on the inverter drive signals Sup to Swn outputted from the generator pulse pattern producer 77a and the converter drive signals Srni, Ssni, Stni ($1 \leq i \leq 3$, i = an integer) outputted from the pattern generators 91a to 91c. As shown in FIG. 10, the switch drive signals S1r, S1s, S1t, S2r, S2s, S2t are signals for driving the first directional switching elements, for example, the unidirectional switching elements 13 in the respective bidirectional switches Sw1 to Sw6. In the following Eq. (4), "*" is "u," "v," or "w."

$$\begin{bmatrix} S1r & Sr1 & S2r & Sr2 \\ S1s & Ss1 & S2s & Ss2 \\ S1t & St1 & S2t & St2 \end{bmatrix} = \begin{bmatrix} Srni & Srpi & Srni & Srpi \\ Ssni & Sspi & Ssni & Sspi \\ Stni & Stpi & Stni & Stpi \end{bmatrix} \begin{bmatrix} S^*p & 0 & 0 & 0 \\ 0 & S^*n & 0 & 0 \\ 0 & 0 & S^*n & 0 \\ 0 & 0 & 0 & S^*p \end{bmatrix}$$

$$\ldots\ldots\ldots (4)$$

Specifically, the signal generator 92a generates U-phase switch drive signals S1r, S1s, S1t, S2r, S2s, S2t (hereinafter, referred to as "SAu1") by using the following Eq. (5) based on the inverter signals Sup and Sun and the converter drive signals Srn1, Ssn1, Stn1 outputted from the pattern generator 91a.

$$\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Sup & 0 \\ 0 & Sun \end{bmatrix} \quad \ldots\ldots\ldots (5)$$

Further, the signal generator 92a generates V-phase switch drive signals S1r, S1s, S1t, S2r, S2s, S2t (hereinafter, referred to as "SAv1") by using the following Eq. (6) based on the inverter drive signals Svp and Svn and the converter drive signals Srn1, Ssn1, Stn1 outputted from the pattern generator 91a.

$$\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Svp & 0 \\ 0 & Svn \end{bmatrix} \quad \ldots\ldots\ldots (6)$$

Further, the signal generator 92a generates W-phase switch drive signals S1r, S1s, S1t, S2r, S2s, S2t (hereinafter, referred to as "SAw1") by using the following Eq. (7) based on the inverter drive signals Swp and Swn and the converter drive signals Srn1, Ssn1, Stn1 outputted from the pattern generator 91a.

$$\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Swp & 0 \\ 0 & Swn \end{bmatrix} \quad \ldots\ldots\ldots (7)$$

The signal generator 92b has the same configuration as the signal generator 92a. Similar to the signal generator 92a, the signal generator 92b generates switch drive signals S1r, S1s, S1t, S2r, S2s, S2t for each of the U-phase, V-phase and W-phase (hereinafter, referred to as "SAu2", "SAv2", "SAw2") by using the above Eqs. (5) to (7) based on the inverter drive signals Sup to Swn and the converter drive signals Srn2, Ssn2, Stn2 outputted from the pattern generator 91b. Further, in the above Eqs. (5) to (7), the values of the converter drive signals Srn2, Ssn2, Stn2 are used instead of those of "Srn1", "Ssn1" and "Stn1", respectively.

The signal generator 92c has also the same configuration as the signal generator 92a. Similar to the signal generator 92a, the signal generator 92c generates switch drive signals S1r, S1s, S1t, S2r, S2s, S2t for each of the U-phase, V-phase and W-phase (hereinafter, referred to as "SAu3", "SAv3", "SAw3") by using the above Eqs. (5) to (7) based on the inverter drive signals Sup to Swn and the converter drive signals Srn3, Ssn3, Stn3 outputted from the pattern generator 91c. Further, in the above Eqs. (5) to (7), the values of the switch drive signals Srn3, Ssn3, Stn3 are used instead of those of "Srn1", "Ssn1" and "Stn1", respectively.

As shown in FIG. 12, the GrGe switch drive signal generator 79a includes signal generators 93a to 93c. The signal generators 93a to 93c generate switch drive signals Sr1, Ss1, St1, Sr2, Ss2, St2 by using the above Eq. (4) based on the inverter drive signals Sup to Swn outputted from the generator pulse pattern producer 77a and the converter drive signals Srpi, Sspi, Stpi ($1 \le i \le 3$, i = an integer) outputted from the pattern generators 91a to 91c. As shown in FIG. 10, the switch drive signals Sr1, Ss1, St1, Sr2, Ss2, St2 are signals for driving the second directional switching elements, for example, the unidirectional switching elements 14 in the respective bidirectional switches Sw1 to Sw6.

Specifically, the signal generator 93a generates U-phase switch drive signals Sr1, Ss1, St1, Sr2, Ss2, St2 (hereinafter, referred to as "SBu1") by using the following Eq. (8) based on the inverter drive signals Sup and Sun and the converter drive signals Srp1, Ssp1, Stp1 outputted from the pattern generator 91a.

$$\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Sup & 0 \\ 0 & Sun \end{bmatrix} \quad \cdots\cdots\cdots\cdots (8)$$

Further, the signal generator 93a generates V-phase switch drive signals Sr1, Ss1, St1, Sr2, Ss2, St2 (hereinafter, referred to as "SBv1") by using the following Eq. (9) based on the inverter drive signals Svp and Svn and the converter drive signals Srp1, Ssp1, Stp1 outputted from the pattern generator 91a.

$$\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Svp & 0 \\ 0 & Svn \end{bmatrix} \quad \cdots\cdots\cdots\cdots (9)$$

Further, the signal generator 93a generates W-phase switch drive signals Sr1, Ss1, St1, Sr2, Ss2, St2 (hereinafter, referred to as "SBw1") by using the following Eq. (10) based on the inverter drive signals Swp and Swn and the converter drive signals Srp1, Ssp1, Stp1 outputted from the pattern generator 91a.

$$\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Swp & 0 \\ 0 & Swn \end{bmatrix} \quad \cdots\cdots\cdots\cdots (10)$$

The signal generator 93b has the same configuration as the signal generator 93a. Similar to the signal generator 93a, the signal generator 93b generates switch drive signals Sr1, Ss1, St1, Sr2, Ss2, St2 for each of the U-phase, V-phase and W-phase (hereinafter, referred to as "SBu2", "SBv2", "SBw2") by using the above Eqs. (8) to (10) based on the inverter drive signals Sup to Swn and the converter drive signals Srp2, Ssp2, Stp2 outputted from the pattern generator 91b. Further, in the above Eqs. (8) to (10), the values of the converter drive signals Srp2, Ssp2, Stp2 are used instead of those of to the "Srp1", "Ssp1" and "Stp1."

The signal generator 93c has the same configuration as the signal generator 93a. Similar to the signal generator 93a, the signal generator 93c generates switch drive signals Sr1, Ss1, St1, Sr2, Ss2, St2 for each of the U-phase, V-phase and W-phase (hereinafter, referred to as "SBu3", "SBv3", "SBw3") by using the above Eqs. (8) to (10) based on the inverter drive signals Sup to Swn and the converter drive signals Srp3, Ssp3, Stp3 outputted from the pattern generator 91c. Further, in the above Eqs. (8) to (10), the values of the converter drive signals Srp3, Ssp3, Stp3 are used instead of those of the "Srp1", "Ssp1" and "Stp1."

In this way, the switch drive signals SAu1 to SAu3, SAv1 to SAv3, SAw1 to SAw3, SBu1 to SBu3, SBv1 to SBv3, SBw1 to SBw3 generated for each of the U-phase, V-phase and W-phase are outputted to the switch units 22a of the respective power cells 21a to 21i from the pulse pattern generator 43a of the second drive control unit 32a when the power failure detection signal Sd is high.

Specifically, as shown in FIG. 9, the U-phase switch drive signals SAu1 to SAu3 and SBu1 to SBu3 are outputted to the power cells 21a, 21d, 21g of the U-phase power cell unit 21u. Further, the V-phase switch drive signals SAv1 to SAv3 and SBv1 to SBv3 are outputted to the power cells 21b, 21e, 21h of the V-phase power cell unit 21v. Further, the W-phase switch drive signals SAw1 to SAw3 and SBw1 to SBw3 are outputted to the power cells 21c, 21f, 21i of the W-phase power cell unit 21w.

Thus, among the bidirectional switches Sw1 to Sw6 of the switch unit 22a of the respective power cells 21a to 21i, it is possible to drive the first directional switching elements in one bidirectional switch and the second directional switching elements in another bidirectional switch which allow flowing of a current in two phases of r-phase, s-phase and t-phase of the secondary windings 12 and in two phases of the rotary electric machine 3.

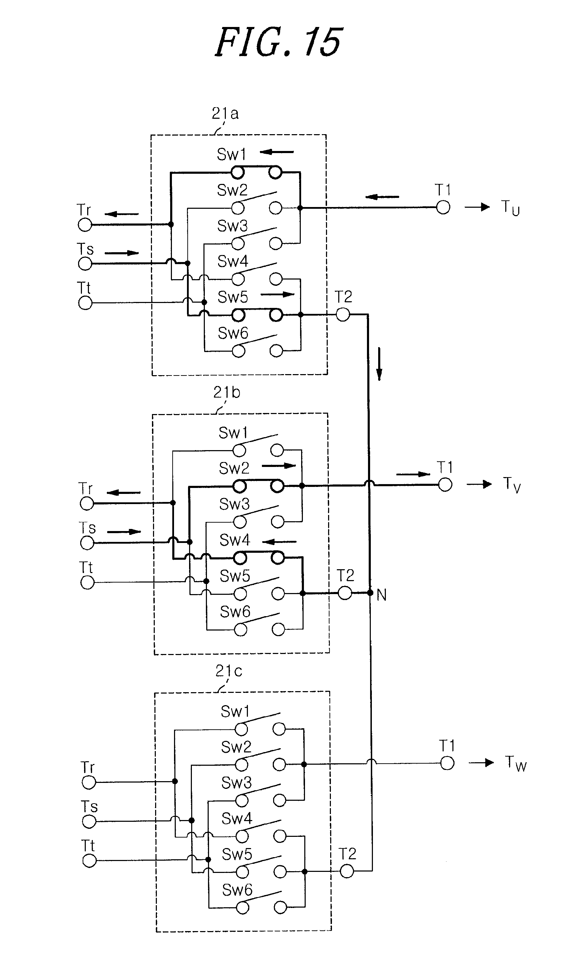

A specific control example of the bidirectional switches Sw1 to Sw6 by the controller 30a will be described with reference to FIGS. 15 to 18. In FIGS. 15 to 18, for the sake of understanding, each of the bidirectional switches Sw1 to Sw6 is represented by one simplified symbol. Further, the control for the power cells 21a to 21c will be described as an example.

FIG. 15 illustrates a control state of the bidirectional switches Sw1 to Sw6 by the controller 30a when the voltage of the secondary winding 12 is at a timing ta1 in FIG. 13, and the voltage of the rotational machine 3 is at a timing tb1 in FIG. 14.

If the voltage of the secondary winding 12 is at the timing ta1 in FIG. 13, the converter drive signals Srn1 and Ssp1 are high, and if the voltage of the rotational machine 3 is at the timing tb1 in FIG. 14, the inverter drive signals Sup and Svn are high.

From the above Eq. (4), the switch drive signals S1r and Ss2 for the U-phase power cell 21a are high, and the switch drive signals Ss1 and S2r for the V-phase power cell 21b are high. Thus, the current flowing through the switch unit 22a can be expressed as shown in FIG. 15.

Specifically, the switch drive signal S1r of high level is a signal to turn on the unidirectional switching element 13 in the bidirectional switch Sw1, and the switch drive signal Ss2 of high level is a signal to turn on the unidirectional switching element 14 in the bidirectional switch Sw5. Further, the switch drive signal Ss1 of high level is a signal to turn on the unidirectional switching element 14 in the bidirectional switch Sw2, and the switch drive signal S2r of high level is a signal to turn on the unidirectional switching element 13 in the bidirectional switch Sw4.

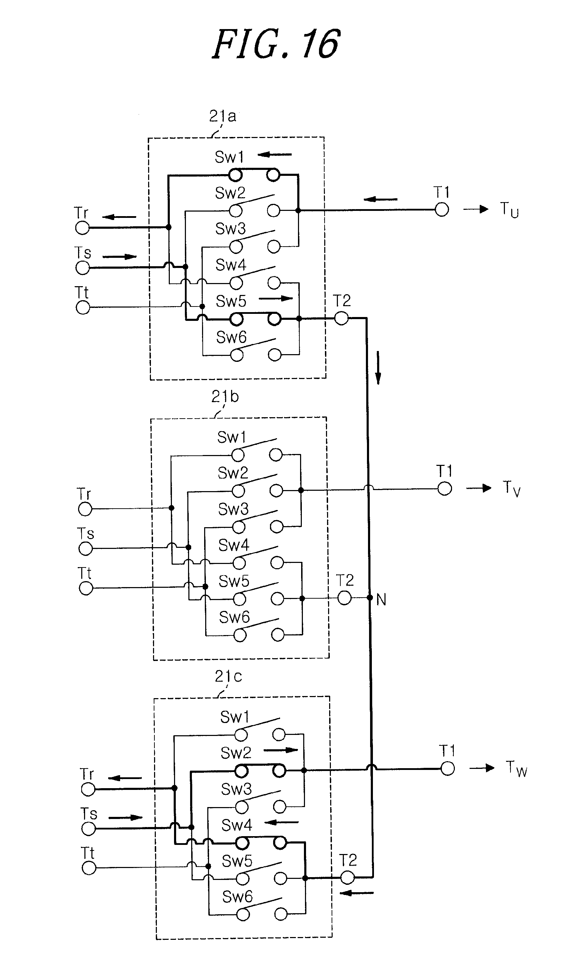

FIG. 16 shows another control state of the bidirectional switches Sw1 to Sw6 by the controller 30a when the voltage of the secondary winding 12 is in a state of the timing ta1 in FIG. 13 and the voltage of the rotational machine 3 is in a state of the timing tb2 in FIG. 14. The voltage of the rotational machine 3 is in a state of the timing tb1 as shown in FIG. 15, but in the example shown in FIG. 16, the voltage of the rotational machine 3 is in a state of the timing tb2 unlike the example shown in FIG. 15.

If the voltage of the rotational machine 3 is in a state of the timing tb2 shown in FIG. 14, the inverter drive signals Sup and Swn are high. That is, the inverter drive signal Svn is high at the timing tb1, but the inverter drive signal Swn is high at the timing tb2.

In this case, from the above Eq. (4), the switch drive signals Ss1 and S2r for the W-phase power cell 21c are high, and the current flowing through the switch unit 22a can be expressed as shown in FIG. 16.

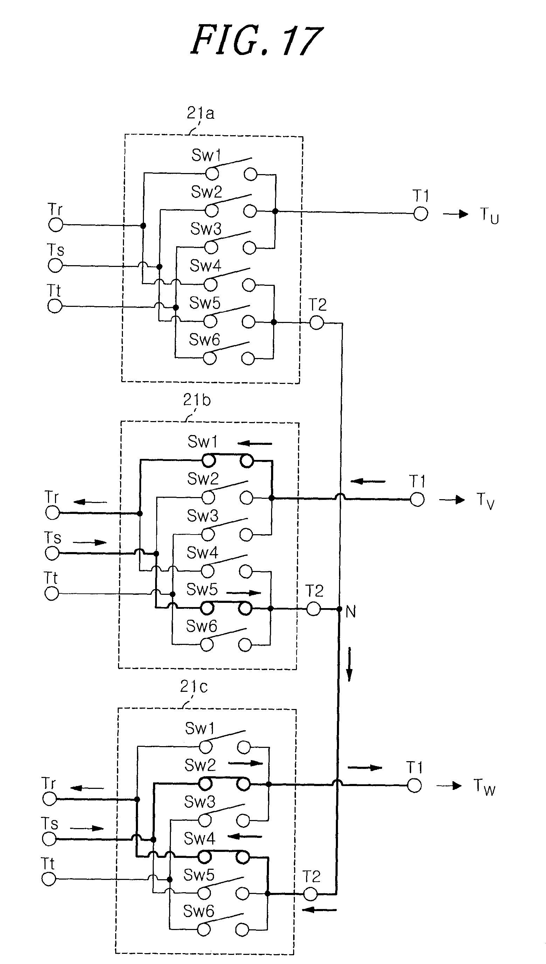

FIG. 17 illustrates still another control state of the bidirectional switches Sw1 to Sw6 by the controller 30a when the voltage of the secondary winding 12 is in a state of the timing ta1 in FIG. 13 and the voltage of the rotational machine 3 is in a state of the timing tb3 in FIG. 14. The voltage of the rotational machine 3 is in a state of the timing tb2 in the example shown in FIG. 16, but in the example shown in FIG. 17, the voltage of the rotational machine 3 is in a state of the timing tb3 unlike the example shown in FIG. 16.

If the voltage of the rotational machine 3 is in a state of the timing tb3 shown in FIG. 14, the inverter drive signals Svp and Swn are high. That is, the inverter drive signal Sup is high at the timing tb2, but the inverter drive signal Svp is high at the timing tb3.

In this case, from the above Eq. (4), the switch drive signals S1r and Ss2 for the V-phase power cell 21b are high, and the current flowing through the switch unit 22a can be expressed as shown in FIG. 17.

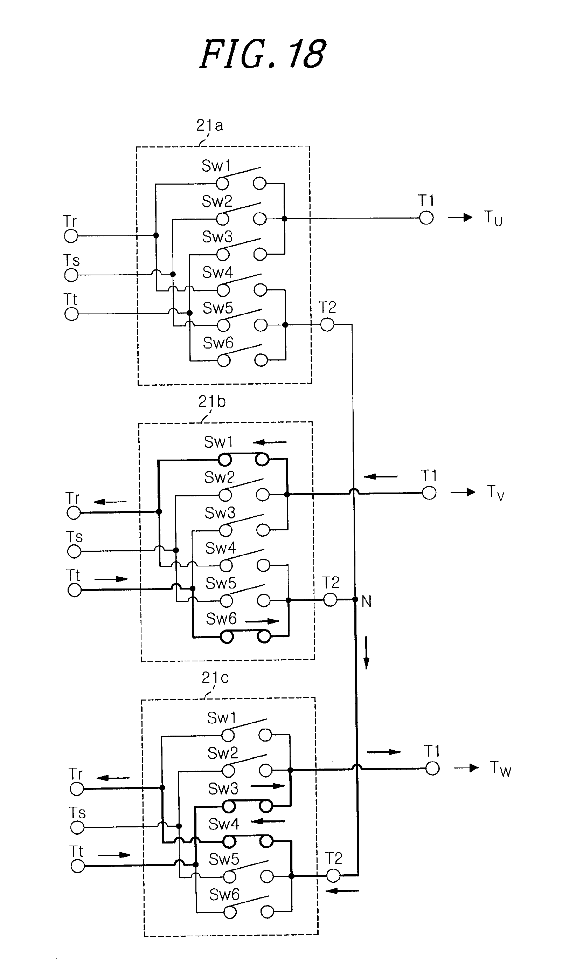

FIG. 18 depicts further another control state of the bidirectional switches Sw1 to Sw6 by the controller 30a when the voltage of the secondary winding 12 is in a state of the timing ta2 in FIG. 13 and the voltage of the rotational machine 3 is in a state of the timing tb3 in FIG. 14. The voltage of the secondary winding 12 is in a state of the timing ta1 in the example shown in FIG. 17, but in the example shown in FIG. 18, the voltage of the secondary winding 12 is in a state of the timing ta2 unlike the example shown in FIG. 17.

In this case, from the above Eq. (4), the switch drive signals S1r and St2 for the V-phase power cell 21b are high, and the switch drive signals St1 and S2r for the W-phase power cell 21c are high. Therefore, the current flowing through the switch unit 22a can be expressed as shown in FIG. 18.

In this case, the switch drive signal St2 of high level is a signal to turn on the second directional switching element, for example, the unidirectional switching element 14 in the bidirectional switch Sw6, and the switch drive signal St1 of high level is a signal to turn on the second directional switching element, for example, the unidirectional switching element 14 in the bidirectional switch Sw3.

Further, the switch drive signal S1r of high level is a signal to turn on the first directional switching element, for example, the unidirectional switching element 13 in the bidirectional switch Sw1, and the switch drive signal S2r of high level is a signal to turn on the first directional switching element, for example, the unidirectional switching element 13 in the bidirectional switch Sw4.

Thus, among the bidirectional switches Sw1 to Sw6 of the switch units 22a included in the power cells 21a to 21c, the first directional switching elements, for example, the unidirectional switching elements 13 in two bidirectional switches for allowing the current to flow from the rotational machine 3 to the secondary windings 12 are turned on, and the second directional switching elements, for example, the unidirectional switching elements 14 in another two bidirectional switches for allowing the current to flow from the secondary windings 12 to the rotational machine 3 are turned on. The power cells 21d to 21f and the power cells 21g to 21i are also controlled in the same manner as the power cells 21a to 21c.

Further, the voltages inputted to the power cells 21d to 21f are voltages of the r2-phase, s2-phase and t2-phase of the secondary windings 12d to 12f, and the power cells 21d to 21f are controlled by the converter drive signals Srp2 to Stn2 which respectively have phase leads of 20° to the converter drive signals Srp1 to Stn1. The voltages inputted to the power cells 21g to 21i are voltages of r3-phase, s3-phase and t3-phase of the secondary windings 12g to 12i, and the power cells 21g to 21i are respectively controlled by the converter drive signals Srp3 to Stn3 which respectively have phase lead of 40° to the converter drive signals Srp1 to Stn1.

As described above, the controller 30a of the series-connected multilevel matrix converter 1a in accordance with the second embodiment includes a first drive control unit 31a and a second drive control unit 32a. The first drive control unit 31a performs power conversion by the voltage control performed by turning on both of the first and the second directional switching element, for example, the unidirectional switching elements 13 and 14 in the respective bidirectional switches Sw1 to Sw6. Further, the second drive control unit 32a performs power conversion by the current control performed by turning on either the first directional switching element, for example, the unidirectional switching element 13 or the second directional switching element, for example, the unidirectional switching element 14 in each of at least two of the bidirectional switches Sw1 to Sw6.

Furthermore, when the voltage of the power grid 2 exceeds a predetermined value, the series-connected multilevel matrix converter 1a performs the power conversion control by the first drive control unit 31a, and when the voltage of the power grid 2 is not more than the predetermined value, the matrix converter 1a performs the power conversion control by the second drive control unit 32a. Thus, even when the voltage of the power grid 2 becomes low, the series-connected multilevel matrix converter 1a can continue a power conversion operation while keeping a flow of a reactive current to the power grid 2.

In the power generation system, when the voltage of the power grid 2 becomes low due to a power failure or the like, it may be required to supply a reactive power to the power grid 2. The series-connected multilevel matrix converter 1a in accordance with the present embodiment can respond appropriately to such request.

In the case where a grid reactive current command IQref defining a magnitude of reactive power is inputted from the administrator side of the power grid 2, the grid reactive current command IQref may be outputted to the subtractor 63 from the grid reactive current commander 62. By this operation, it is possible to set the magnitude of reactive current of the power grid 2 externally.

Further, the second drive control unit 32a employs the current type inverter model 80 as a switching model. A switching pattern which causes a 120° conduction current 90° delay from the grid voltage phase is applied to the converter 81, and a switching pattern which causes a 120° conduction reactive current with a magnitude corresponding to the grid reactive current command IQref is applied to the inverter 82. The switching pattern applied to the converter 81 and the switching pattern applied to the inverter 82 are combined and outputted as switch drive signals SA and SB for driving the first directional switching element (for example, unidirectional switching elements 13) and the second directional switching element (for example, unidirectional switching elements 14) of the bidirectional switches Sw1 to Sw6 of the respective power cells 21a to 21i.

With this configuration, since the combined switching pattern is outputted as the switch drive signals SA and SB for driving the unidirectional switching elements 13 and 14 of the bidirectional switches Sw1 to Sw6 of the respective power cells 21a to 21i, the reactive current having a magnitude corresponding to the grid reactive current command IQref can easily and accurately flow to the power grid 2.

Further, in the embodiment described above, although the switch unit 22a of each power cell 21 is driven by using a switching pattern of causing a 120° conduction current to flow, the control method is not limited thereto. That is, various modifications are possible as long as it continues to perform the power conversion operation while causing the reactive current to the power grid 2 by performing the current control with the first and the second directional switching element controlled individually.

Further, in the above-described embodiments, the case of using a synchronous generator as the rotational machine 3 has been described, but the rotational machine 3 may be an induction generator. In the case of using an induction generator as the rotational machine 3, the matrix converters 1 and 1a may be configured as follows, for example.

A voltage due to the residual magnetic flux is generated in the induction generator after a power failure occurs, and a rotational speed of the induction generator is obtained based on an output of the position detector 4. The controllers 30 and 30a set a torque command to zero, and then generate a slip frequency command based on the torque command according to the well-known vector control law for the induction machine. Thus, the controllers 30 and 30a generate an output frequency command by adding the slip frequency command to the rotational speed obtained based on the output of the position detector 4.

Further, the controllers 30 and 30a obtain the generator phase θuvw by integrating the output frequency command, and generate the generator correction phase θuvw' by adding the obtained generator phase θuvw to the generator phase correction value dθuvw. Accordingly, even when the voltage of the power grid 2 becomes low, it is possible to continue to perform the power conversion operation while keeping the flow of a reactive current to the power grid 2.

Although an example of using the generator as the rotational machine 3 has been described in the above-described embodiments, it is possible to employ an electric motor as the rotational machine 3. Similarly, even when the voltage of the power grid 2 becomes low, it is possible to continue the operation by using the speed electromotive force of the motor.

That is, when the voltage of the power grid 2 becomes low, the power cannot be sufficiently supplied to the motor from the power grid 2, but the rotor of the motor remains in the rotation state while reducing the speed. Thus, it is possible to continue the operation by, for example, supplying the electromotive force generated by such rotation, as the reactive power, to the power grid 2.

Further, the configurations shown in FIGS. 3 and 11 have been described as examples of the active current compensators 41 and 41a in the above-described embodiments, but the active current compensators 41 and 41a may be configured by using a table. That is, each of the active current compensators 41 and 41a may include a memory unit for storing a two-dimensional table which shows a relationship between the grid active current IP and the grid reactive current IQ, and the grid phase compensation value $d\theta_{RST}$, and output the grid phase compensation value $d\theta_{RST}$ from this table based on the grid phase current values $I_R$, $I_S$ and $I_T$. Further, by calculation of $d\theta_{RST} = -\tan^{-1}(IQ/IP)$, the grid phase compensation value $d\theta_{RST}$ may be obtained and outputted.

Furthermore, the configurations shown in FIGS. 3 and 11 have been described as examples of the reactive current compensators 42 and 42a in the above-described embodiments, but each of the reactive current compensators 42 and 42a may be configured by using a table. That is, each of the reactive current compensators 42 and 42a may include a memory unit for storing a table which shows a relationship between the grid reactive current command IQref and the generator phase correction value dθuvw, and output the generator phase compensation value dθuvw from this table based on the grid reactive current command IQref.

In the above-described second embodiment, the U-phase, the V-phase and the W-phase power cell unit are configured such that the power cells 21 are connected in series in three levels, but may be configured such that the power cells 21 are connected in series in two levels, or connected in series in four or more levels.

In the above-described second embodiment, some functions of the controller 30a may be provided in the respective power cells 21. For example, some or all of the functions of the second drive control unit 32a and the switch 33a, which selects the switch drive signals from the first drive control unit or the second drive control unit based on the power failure detection signal Sd outputted from the power failure detector 26, and outputs them to the switching unit 22a, may be provided in the respective power cells 21.

Further, in the above-described second embodiment, the grid pulse pattern producer 76a may generate converter drive signals Srp1-3 to Stn1-3 for causing a 120° conduction current delayed by 90° with respect to each of the voltage phases θrst1 to θrst3 of the respective secondary windings 12. Thus, the reactive current delayed by 90° while the grid active current IP is zero can flow to the power grid 12. Further, whether the reactive current flowing to the secondary windings 12 is delayed by 90° or advanced by 90° may be selected, for example, by setting the grid pulse pattern producer 76a through manipulation from the outside.

(Third Embodiment)

Next, a series-connected multilevel matrix converter in accordance with a third embodiment will be described. The series-connected multilevel matrix converter 1a in accordance with the second embodiment generates the converter drive signals Srp1 to Stn1 and the like based on the grid correction phase $\theta_{RST}$' generated by adding the grid phase compensation value $d\theta_{RST}$ to the grid phase $\theta_{RST}$. The series-connected multilevel matrix converter 1b in accordance with the third embodiment generates the switch drive signals Srp1 to Stn1 and the like based on each of correction phases θrst1' to θrst3' generated by adding the grid phase compensation value $d\theta_{RST}$ to the respective voltage phases θrst1 to θrst3 of the secondary windings 12.

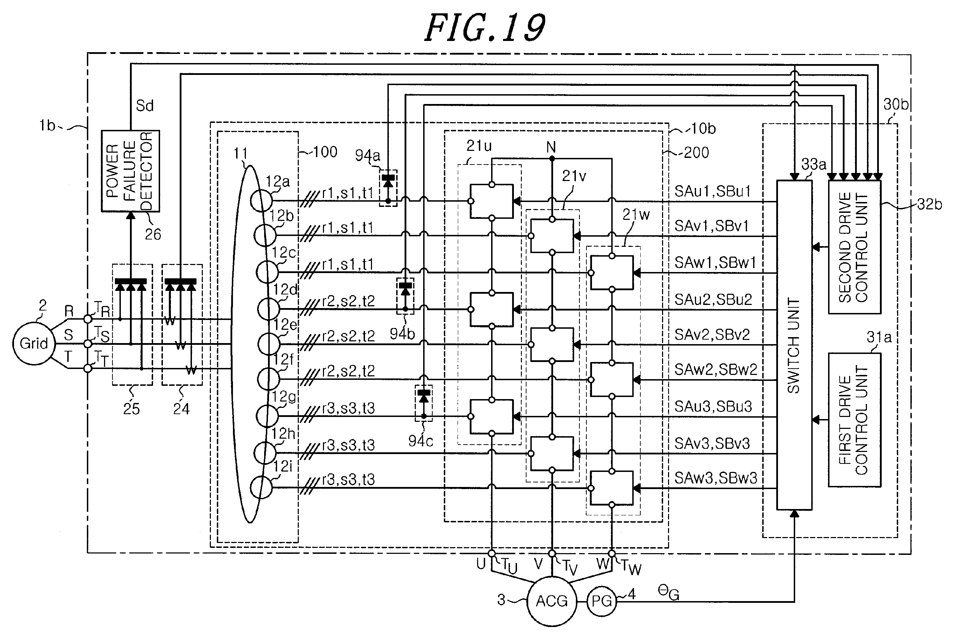

Hereinafter, the series-connected multilevel matrix converter 1b in accordance with the third embodiment will be described with reference to FIGS. 19 to 21. FIG. 19 shows a configuration example of a series-connected multilevel matrix converter 1b in accordance with the third embodiment. Further, the same reference numerals are given to the same components as those of the second embodiment described above, and a description thereof that overlaps with that of the second embodiment will be omitted appropriately.

As shown in FIG. 19, the series-connected multilevel matrix converter 1b in accordance with the third embodiment includes voltage detection units 94a to 94c for detecting voltages of the secondary windings 12a, 12d and 12g. Specifically, the voltage detection unit 94a, provided between the secondary winding 12a and the multi-winding transformer 100, detects instantaneous voltages Vr1, Vs1 and Vt1 (hereinafter, referred to as "secondary voltage values Vr1, Vs1 and Vt1") of r1-phase, s1-phase and t1-phase of the secondary winding 12a.

Further, the voltage detection unit 94b, provided between the secondary winding 12d and the multi-winding transformer 100, detects instantaneous voltages Vr2, Vs2 and Vt2 (hereinafter, referred to as "secondary voltage values Vr2, Vs2 and Vt2") of r2-phase, s2-phase and t2-phase of the secondary winding 12d. The voltage detection unit 94c, provided between the secondary winding 12g and the multi-winding transformer 100, detects instantaneous voltages Vr3, Vs3 and Vt3 (hereinafter, referred to as "secondary voltage values Vr3, Vs3 and Vt3") of r3-phase, s3-phase and t3-phase of the secondary winding 12g.

The secondary voltage values Vr1, Vs1, Vt1, Vr2, Vs2, Vt2, Vr3, Vs3 and Vt3 detected by the voltage detection units 94a to 94c are inputted to a second drive control unit 32b of a controller 30b.

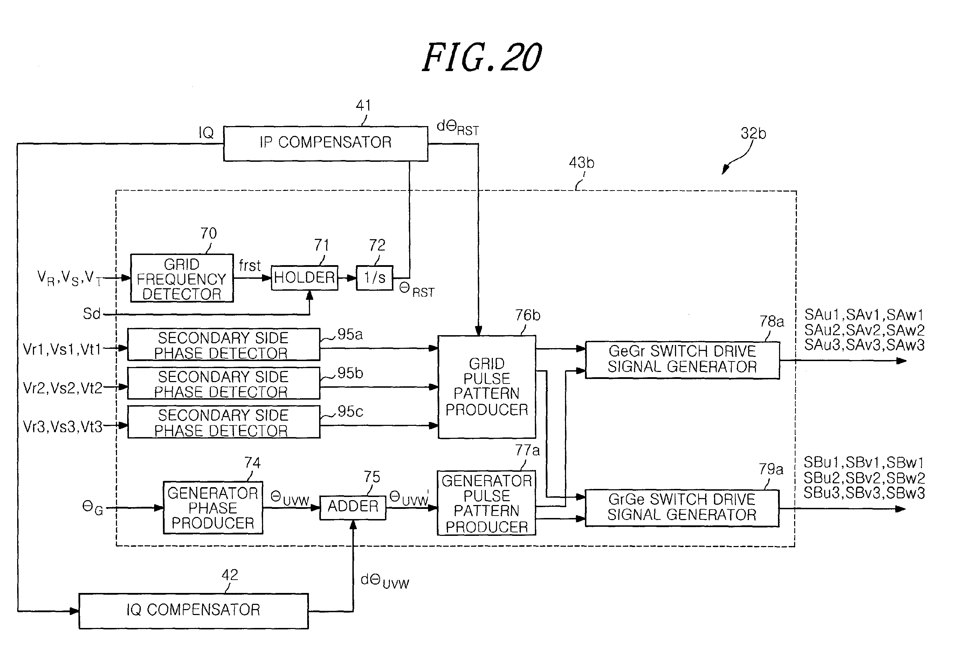

FIG. 20 illustrates an example of a specific configuration of the second drive control unit 32b. As shown in FIG. 20, a pulse pattern generator 43b of the second drive control unit 32b includes secondary voltage phase detectors 95a to 95c. For example, each of the secondary voltage phase detectors 95a to 95c includes an integrator and a PLL.

The PLL of the secondary voltage phase detector 95a detects a secondary voltage frequency synchronized with the voltage frequency of the r1-phase, the s1-phase and the t1-phase from the secondary voltage values Vr1, Vs1 and Vt1. Then, the integrator generates and outputs the voltage phase $\theta$rst1 by integrating the secondary voltage frequency. Similarly, the secondary voltage phase detector 95b detects a secondary voltage frequency synchronized with the voltage frequency of the r2-phase, the s2-phase and the t2-phase from the secondary voltage values Vr2, Vs2 and Vt2 by the PLL, and generates and outputs the voltage phase $\theta$rst2 by integrating the secondary voltage frequency by the integrator.

Further, the secondary voltage phase detector 95c detects a secondary voltage frequency synchronized with the voltage frequency of the r3-phase, the s3-phase and the t3-phase from the secondary voltage values Vr3, Vs3 and Vt3 by the PLL, and generates and outputs the voltage phase $\theta$rst3 by integrating the secondary voltage frequency by the integrator.

The voltage phases $\theta$rst1 to $\theta$rst3 outputted from the secondary voltage phase detectors 95a to 95c are inputted to a grid pulse pattern producer 76b. The grid pulse pattern producer 76b generates the converter drive signals Srp1 to Stn1 and the like based on the voltage phases $\theta$rst1 to $\theta$rst3 and the grid phase compensation value d$\theta_{RST}$. Further, unlike the second drive control unit 32a in accordance with the second embodiment, the second drive control unit 32b does not have the adder 73 to generate the grid correction phase $\theta_{RST}$'.

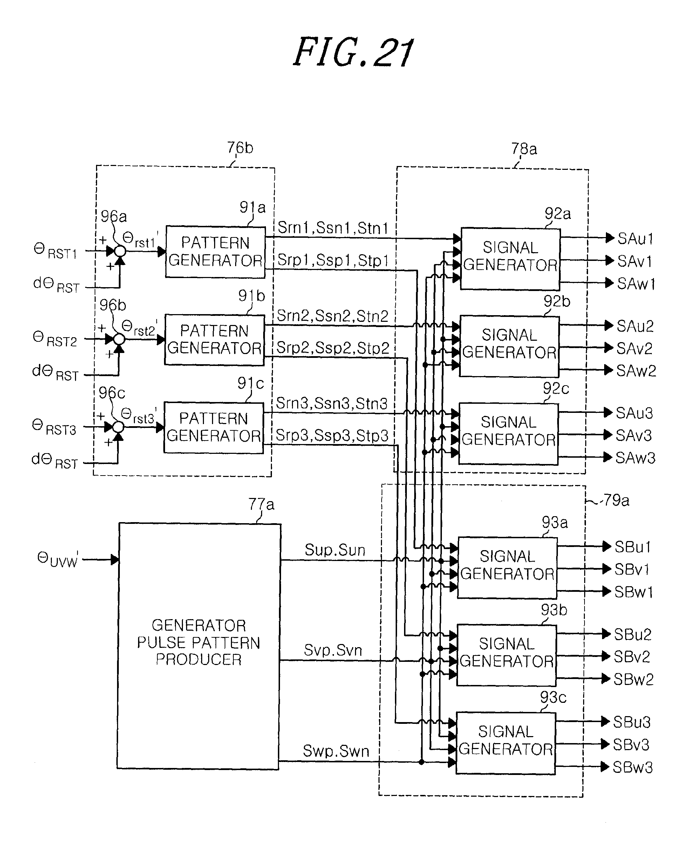

FIG. 21 shows a specific configuration of the grid pulse pattern producer 76b, the GeGr switch drive signal generator 78a and the GrGe switch drive signal generator 79a which are shown in FIG. 20. As shown in FIG. 21, the grid pulse pattern producer 76b includes adders 96a to 96c and pattern generators 91a to 91c.

The adder 96a obtains the compensation phase $\theta$rst1' by adding the voltage phase $\theta$rst1 to the grid phase compensation value d$\theta_{RST}$, and outputs it to the pattern generator 91a. The adder 96b obtains the compensation phase $\theta$rst2' by adding the voltage phase $\theta$rst2 to the grid phase compensation value d$\theta_{RST}$, and outputs it to the pattern generator 91b. Further, the adder 96c obtains the correction phase $\theta$rst3' by adding the voltage phase $\theta$rst3 to the grid phase compensation value d$\theta_{RST}$, and outputs it to the pattern generator 91c.

The pattern generators 91a to 91c have the same configuration as that of the pattern generators 91a to 91c of the second embodiment. Therefore, on the basis of the correction phases $\theta$rst1' to $\theta$rst3' outputted from the respective adders 96a to 96c, the pattern generators 91a to 91c generate patterns of the switch drive signals Srp1 to Stn1, Srp2 to Stn2, Srp3 to Stn3 for causing a 120° conduction current with respect to the respective voltage phases $\theta$rst1 to $\theta$rst3 of each of the secondary windings 12.

As described above, in the third embodiment, the patterns of the switch drive signals Srp1 to Stn1, Srp2 to Stn2, Srp3 to Stn3 are generated based on the correction phases $\theta$rst1' to $\theta$rst3' obtained by adding the grid phase compensation value d$\theta_{RST}$ to the respective voltage phases $\theta$rst1 to $\theta$rst3 of each of the secondary windings 12. Thus, it is possible to perform the power conversion control without having to do the setting based on, for example, the characteristics of the multi-winding transformer 100.

It should be understood by those skilled in the art that various modifications, combinations, sub-combinations and alterations may occur depending on design requirements and other factors insofar as they are within the scope of the appended claims or the equivalents thereof.

**Claims**

1. A matrix converter comprising:

    a power conversion unit configured to be provided between an alternating current (AC) power supply and a rotational machine, the power conversion unit including a plurality of bidirectional switches each of which has at least one first directional switching element for allowing a current flow from the rotational machine to the AC power supply and at least one second directional switching element for allowing a current flow from the AC power supply to the rotational machine; and
    a controller configured to perform power conversion control between the AC power supply and the rotational machine by controlling the power conversion unit,
    wherein the controller includes a first drive control unit configured to perform the power conversion control by simultaneously turning on both of the first directional switching element and the second directional switching element in at least one of the bidirectional switches, and a second drive control unit configured to perform the power conversion control by turning on one of the first directional switching element and the second directional switching element in each of two or more of the bidirectional switch.

2. The matrix converter of claim 1, wherein the bidirectional switches are provided between phases of the AC power supply and phases of the rotational machine, respectively.

3. The matrix converter of claim 2, wherein the second drive control unit performs the power conversion control by turning on the first directional switching element in at least one of the bidirectional switches and the second directional switching element in at least one of the remaining bidirectional switches to allow a current to flow in two phases of the AC power supply and in two phases of the rotational machine.

4. The matrix converter of claim 3, wherein the second drive control unit turns on the first directional switching element in one of the plurality of bidirectional switches, and the second directional switching element in one of the remaining bidirectional switches.

5. The matrix converter of claim 4, wherein the second drive control unit generates switch drive signals for controlling the bidirectional switches by combining converter drive signals and inverter drive signals in a current type inverter model including the converter and the inverter.

6. The matrix converter of claim 5, wherein the second drive control unit performs power conversion control to cause a 120° conduction current by the converter drive signals and a 120° conduction current by the inverter drive signals.

7. The matrix converter of claim 5 or 6, wherein the second drive control unit controls the bidirectional switches by giving the inverter drive signals a phase lead according to a reactive current command.

8. The matrix converter of claim 7, wherein the second drive control unit includes a reactive current commander to generate a reactive current command with a magnitude according to a voltage of the AC power supply.

9. The matrix converter of any one of claims 1 to 8, wherein the controller performs the power conversion control by the first drive control unit when a voltage of the AC power supply exceeds a reference value, and performs the power conversion control by the second drive control unit when the voltage of the AC power supply is not more than the reference value.

10. The matrix converter of claim 1,
wherein the power conversion unit includes power cell units provided at respective phases of the rotational machine, each of the power cell units having at least two power cells series-connected, each of the power cells being separately connected to the AC power supply and having the bidirectional switches.

11. The matrix converter of claim 10,
wherein the power conversion unit further includes a multi-winding transformer having a primary winding connected to the AC power supply and secondary windings connected to the power cells as individual AC power sources, and wherein AC powers supplied from the individual AC power sources to the respective power cells included in the power cell units have different phases from each other.

12. The matrix converter of claim 10,
wherein the controller performs the power conversion control by the first drive control unit when a voltage of the AC power supply exceeds a reference value, and performs the power conversion control by the second drive control unit when the voltage of the AC power supply is not more than the reference value.

13. The matrix converter of claim 11,
wherein the controller performs the power conversion control by the first drive control unit when a voltage of one of the individual AC power sources exceeds a predetermined value, and performs the power conversion control by the second drive control unit when the voltage of the one of the individual AC power sources is not more than the reference value.

14. The matrix converter of any one of claims 10 to 13, wherein the second drive control unit performs the power conversion control by turning on the first directional switching element in at least one of the bidirectional switches and the second directional switching element in at least one of the remaining bidirectional switches to allow a current to flow in two phases of the AC power supply and in two phases of the rotational machine.

15. The matrix converter of claim 14, wherein the second drive control unit turns on the first directional switching element in one of the plurality of bidirectional switches, and the second directional switching element in one of the remaining bidirectional switches.

16. The matrix converter of claim 15, wherein the second drive control unit generates switch drive signals for controlling the bidirectional switches by combining converter drive signals and inverter drive signals in a current type inverter model including the converter and the inverter.

17. The matrix converter of claim 16, wherein the second drive control unit performs power conversion control to cause a 120° conduction current by the converter drive signals and a 120° conduction current by the inverter drive signals.

18. The matrix converter of claim 16 or 17, wherein the second drive control unit controls the bidirectional switches by giving the inverter drive signals a phase lead according to a reactive current command.

19. The matrix converter of claim 18, wherein the second drive control unit includes a reactive current commander to generate a reactive current command with a magnitude according to a voltage of the AC power supply.

# FIG. 1

# FIG.2

# FIG.3

# FIG.4

# FIG.5

# FIG.6

# FIG.7

# FIG.8

FIG.9

# FIG. 10

# FIG. 11

# FIG.12

# FIG.13

# FIG. 14

# FIG. 15

# FIG. 16

# FIG. 17

# FIG. 18

FIG.19

## FIG.20

EP 2 728 729 A2

# FIG.21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005287200 A